# EUROPEAN PATENT APPLICATION

(11) **EP 4 545 935 A1**
(43) Date of publication of application: **30.04.2025**
(21) Application number: 24204849.4
(22) Date of filing: 04.10.2024
(51) Int. Cl.: G01N 15/1404, G01N 15/1409, G01N 15/14, G01N 35/10, G01N 15/10

(54) **FLUID SUPPLY SYSTEMS HAVING A FLOW CONTROL CIRCUIT AND SINGLE FLUIDIC CONNECTION, AND METHODS OF USE THEREOF**

(30) Priority: 27.10.2023 US 202363546024 P
(71) Applicant: Becton, Dickinson and Company, Franklin Lakes, NJ 07417-1880 (US)
(72) Inventor: Ghazi, Christopher, Franklin Lakes, 07417-1880 (US)
(74) Representative: Arnold & Siedsma

(57) **Abstract**

Fluid supply systems are provided. Fluid supply systems of interest include an operating fluid line, a primary flushing fluid line, a secondary fluid line, a flow control circuit fluidically connected to the distal end of the primary flushing fluid line and the distal end of the secondary fluid line, and configured to selectively permit passage of a primary flushing fluid and a secondary fluid through an outlet, and a single fluidic connection configured to fluidically couple to the flow control circuit, the operating fluid line, and a fluidic component of an instrument. Methods of analyzing a sample and assembling an instrument are also provided.

## Description

### CROSS-REFERENCE TO RELATED APPLICATION

Pursuant to 35 U.S.C. § 119 (e), this application claims priority to the filing date of United States Provisional Patent Application Serial No. 63/546,024 filed October 27, 2023.

### INTRODUCTION

Flow-type particle analyzers, such as flow cytometers, are well known analytical tools that enable the characterization of particles on the basis of optical parameters such as light scatter and fluorescence, or by electrical properties, such as impedance.

In a flow cytometer, for example, particles, such as molecules, analyte-bound beads, or individual cells, in a fluid suspension are passed by a detection region in which the particles are exposed to an excitation light, typically from one or more lasers, and the light scattering and fluorescence properties of the particles are measured. Particles or components thereof typically are labeled with fluorescent dyes to facilitate detection, and a multiplicity of different particles or components may be simultaneously detected by using spectrally distinct fluorescent dyes to label the different particles or components. Typically, detection is carried out using a multiplicity of photodetectors, one for each distinct dye to be detected.

In some flow cytometers, a sheath fluid is provided to the flow cell by a pressure driven fluidics system where the sample fluid and sheath fluid are passed through the flow cell under pressure greater than ambient pressure. Changes in the flow rate through the flow cell are achieved by varying the pressure in the sheath fluid reservoir and the ratio of sample fluid to sheath fluid in hydrodynamic flow is determined by the exerted pressure in the sample source and sheath fluid reservoir, as well as by the resistance of the fluidic system supplying the sample and sheath fluid. Flow cytometers can also use a vacuum-driven fluidics system where a vacuum pump draws vacuum downstream from the flow cell and the sample and sheath fluids remain at ambient pressure. To change the rate through the flow cell, vacuum is drawn by the vacuum pump and the ratio of sample fluid to sheath fluid that flows through the flow cell is determined by the ratio of the resistance exerted by the paths of the sample fluid and sheath fluid systems. Fluidic systems providing a hydrodynamically focused flow of particle-containing sample fluid in the center of a particle-free sheath fluid stream often utilize pressurizable tubing, connections and seals that are required to withstand wide ranges of pressure levels, in particular high and low pressures.

Pressure-based fluidics systems configured to provide a flow of sample fluid in a sheath fluid stream include BD Biosciences FACSAria^{™} I (described in U.S. Patent No. 6,767,188), BD Biosciences FACSAria^{™} II, BD Biosciences FACSAria^{™} III, BD Biosciences FACSCanto^{™} flow cytometer, and the Bio-Rad S3e^{™} (described in U.S. Patent No. 9,551,637). These systems may be configured to switch between fluids so that different fluids may be provided to the flow cell at different times, as desired. Often, switching between fluids involves a manual process in which a user reconnects fluid lines to different fluid sources.

### SUMMARY

The present inventors have realized that, while pressure based fluidic systems such as those presented in U.S. Patent Nos. 6,767,188 constitute an improvement in the art of fluidics, additional improvements can be made. In particular, it was discovered that a problem in conventional fluid supply mechanisms is preventing carryover between fluids (i.e., a first fluid remaining in a fluid line that will be used to transport a second fluid). Having very low carryover between multiple fluids is critical in certain applications, such as when a cleaning fluid could impact the purity of the fluids, when cleaning fluids could impact biological samples on the instrument, when multiple cleaning fluids or reagents are needed but direct mixing of the fluid could create an undesirable chemical reaction, etc. This means that upswept lines are either (1) a potential source for instrument contamination, or (2) require manual removal and cleaning by the user. Because they are not fully swept, they also do not ensure low fluid carryover without manual user intervention. As such, fluid supply systems configured to be fully swept and have minimal carryover are desirable. The systems and methods of the invention satisfy this desire.

Aspects of the invention include fluid supply systems. The subject systems include an operating fluid line configured to transport an operating fluid therethrough from a proximal end to a distal end, and comprising an operating fluid reservoir connector at the proximal end configured to fluidically couple to an operating fluid reservoir comprising the operating fluid (e.g., a sheath fluid); a primary flushing fluid line configured to transport a primary flushing fluid therethrough from a proximal end to a distal end, and comprising a primary flushing fluid reservoir connector at the proximal end configured to fluidically couple to a primary flushing fluid reservoir comprising the primary flushing fluid (e.g., an inert fluid); a secondary fluid line configured to transport a secondary fluid therethrough from a proximal end to a distal end, and comprising a secondary fluid reservoir connector at the proximal end configured to fluidically couple to a secondary fluid reservoir comprising the secondary fluid (e.g., cleaning fluid, reagent, etc.); a flow control circuit fluidically connected to the distal end of the primary flushing fluid line and the distal end of the secondary fluid line, and configured to selectively permit passage of the primary flushing fluid and the secondary fluid through an outlet; and a single fluidic connection configured to fluidically couple to the flow control circuit, the operating fluid line, and a fluidic component of an instrument. The single fluidic connection may include, e.g., a quick connect fluid connector or three-way valve. Systems of interest additionally include a fluid supply pump operably connected to the flow control circuit and the single fluidic connection. Embodiments also include the operating fluid reservoir fluidically coupled to the operating fluid line, and/or a pressure regulator operably connected to the operating fluid reservoir and the pressurized air source. In some cases, systems include an operating fluid supply pump operably connected to the single fluidic connection. In select versions, systems include the primary flushing fluid reservoir fluidically coupled to the primary flushing fluid line. Systems in some implementations include the secondary fluid reservoir fluidically coupled to the secondary fluid line. In some instances, the fluid supply system comprises a plurality of secondary fluid lines. In some embodiments, the flow control circuit comprises a bank of valves. The bank of valves can include, e.g., two-way valves or three-way valves. In some cases, the two-way valves or three-way valves are standalone valves. In other cases, the two-way valves or three-way valves are mounted on a manifold. In select instances, the distal end of the primary flushing fluid line is fluidically coupled to a valve in the bank of valves that is furthest from the outlet of the flow control circuit. In some embodiments, the flow control circuit comprises a multi-port selection valve.

In some embodiments, systems of the invention additionally include the instrument. The instrument can include, e.g., a flow cytometer. In some such cases, the fluidic component of the instrument is a flow cell. In certain cases, systems additionally include a vacuum source operably connected to the fluidic component of the instrument. Aspects of the invention additionally include methods of analyzing a sample, Methods of interest include introducing the sample into an instrument comprising a fluid supply system of the invention, and supplying operating fluid to the instrument to analyze the sample. Aspects of the invention also include methods of assembling an instrument. Such methods include operably connecting a fluid supply system of the invention to a fluidic component of an instrument.

### BRIEF DESCRIPTION OF THE FIGURES

The invention may be best understood from the following detailed description when read in conjunction with the accompanying drawings. Included in the drawings are the following figures:
**FIG. 1** presents a block diagram of a fluid supply system according to certain embodiments of the invention.
**FIG. 2** presents a fluid flow diagram of a fluid supply system according to certain embodiments of the invention.
**FIG. 3** presents a fluid flow diagram of a fluid supply system driven by pressurized air over liquid according to certain embodiments of the invention.
**FIG. 4** presents a fluid flow diagram of a fluid supply system having an operating fluid supply pump according to certain embodiments of the invention.
**FIG. 5** presents a fluid flow diagram of a fluid supply system having a vacuum source according to certain embodiments of the invention.
**FIGS. 6A-6B** present a fluid flow diagram of a fluid supply system having a single fluidic connection comprised of a quick connect fluid connector according to certain embodiments of the invention.
**FIG.** 7 presents a fluid flow diagram of a fluid supply system having a single fluidic connection comprised of a three-way valve according to certain embodiments of the invention.
**FIG.** 8 presents a fluid flow diagram of a fluid supply system having a flow control circuit comprised of a bank of standalone two-way valves according to certain embodiments of the invention.
**FIG.** 9 presents a fluid flow diagram of a fluid supply system having a flow control circuit comprised of a bank of two-way valves mounted on a manifold according to certain embodiments of the invention.
**FIG. 10** presents a fluid flow diagram of a fluid supply system having a flow control circuit comprised of a bank of standalone three-way valves according to certain embodiments of the invention.
**FIG. 11** presents a fluid flow diagram of a fluid supply system having a flow control circuit comprised of a bank of three-way valves mounted on a manifold according to certain embodiments of the invention.
**FIG. 12** presents a fluid flow diagram of a fluid supply system having a flow control circuit comprised of a multi-port selection valve according to certain embodiments of the invention.
**FIG. 13** provides a flow chart of the primary functions of a fluid management system of a particle analyzer configured to analyze a sample, according to certain embodiments.
**FIG. 14** provides a flow chart of sub-functions within the primary functions of a fluid management system of a particle analyzer configured to analyze a sample, according to certain embodiments.
**FIG. 15** provides a schematic of an embodiment of a fluid management system of a particle analyzer configured to analyze a sample.
**FIG. 16** provides a flow chart of the primary functions of a fluid management system of a particle sorter configured to analyze and sort a sample, according to certain embodiments.
**FIG. 17** provides a flow chart of sub-functions within the primary functions of a fluid management system of a particle sorter configured to analyze and sort a sample, according to certain embodiments.
**FIG. 18** provides a schematic an embodiment of a fluid management system of particle sorter configured to analyze and sort a sample.
**FIG. 19** provides a flow chart of the primary functions of a fluid management system of a hybrid system configured to alternatively (a) analyze a sample or (b) analyze and sort a sample, according to certain embodiments.
**FIG. 20** provides a flow chart of sub-functions within the primary functions of a fluid management system of a hybrid system configured to alternatively (a) analyze a sample or (b) analyze and sort a sample, according to certain embodiments.
**FIG. 21** provides a schematic an embodiment of a fluid management system of a hybrid system configured to alternatively (a) analyze a sample or (b) analyze and sort a sample.
**FIG. 22** presents a functional block diagram of an instrument comprised of a flow cytometer according to certain embodiments of the invention.
**FIG. 23** presents a block diagram of a control system according to certain embodiments of the invention.
**FIGS. 24A-24B** depict a schematic drawing of a particle sorter system according to certain embodiments of the invention.
**FIG. 25** depicts an image-enabled particle sorter according to certain embodiments.
**FIG. 26** depicts a block diagram of a computing system according to certain embodiments of the invention.

### DETAILED DESCRIPTION

Fluid supply systems are provided. Fluid supply systems of interest include an operating fluid line, a primary flushing fluid line, a secondary fluid line, a flow control circuit fluidically connected to the distal end of the primary flushing fluid line and the distal end of the secondary fluid line, and configured to selectively permit passage of a primary flushing fluid and a secondary fluid through an outlet, and a single fluidic connection configured to fluidically couple to the flow control circuit, the operating fluid line, and a fluidic component of an instrument. Methods of analyzing a sample and assembling an instrument are also provided.

Before the present invention is described in greater detail, it is to be understood that this invention is not limited to particular embodiments described, as such may, of course, vary. It is also to be understood that the terminology used herein is for the purpose of describing particular embodiments only, and is not intended to be limiting, since the scope of the present invention will be limited only by the appended claims.

Where a range of values is provided, it is understood that each intervening value, to the tenth of the unit of the lower limit unless the context clearly dictates otherwise, between the upper and lower limit of that range and any other stated or intervening value in that stated range, is encompassed within the invention. The upper and lower limits of these smaller ranges may independently be included in the smaller ranges and are also encompassed within the invention, subject to any specifically excluded limit in the stated range. Where the stated range includes one or both of the limits, ranges excluding either or both of those included limits are also included in the invention.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this invention belongs. Although any methods and materials similar or equivalent to those described herein can also be used in the practice or testing of the present invention, representative illustrative methods and materials are now described.

The citation of any publication is for its disclosure prior to the filing date and should not be construed as an admission that the present invention is not entitled to antedate such publication by virtue of prior invention. Further, the dates of publication provided may be different from the actual publication dates which may need to be independently confirmed.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

As will be apparent to those of skill in the art upon reading this disclosure, each of the individual embodiments described and illustrated herein has discrete components and features which may be readily separated from or combined with the features of any of the other several embodiments without departing from the scope of the present invention. Any recited method can be carried out in the order of events recited or in any other order which is logically possible.

While the system and method has or will be described for the sake of grammatical fluidity with functional explanations, it is to be expressly understood that the claims, unless expressly formulated under 35 U.S.C. §112, are not to be construed as necessarily limited in any way by the construction of "means" or "steps" limitations, but are to be accorded the full scope of the meaning and equivalents of the definition provided by the claims under the judicial doctrine of equivalents, and in the case where the claims are expressly formulated under 35 U.S.C. §112 are to be accorded full statutory equivalents under 35 U.S.C. §112.

### FLUID SUPPLY SYSTEMS

Aspects of the invention include fluid supply systems. The systems of the invention may be configured to selectively supply a fluid, e.g., to a fluidic component of an instrument. By "selectively" supply fluid, it is meant that the fluid supply system is configured to supply one fluid to the exclusion of other fluids. Selectively supplied fluids include minimal (in some cases, zero) traces of other fluids. In other words, fluid supply systems are configured to reduce or eliminate carryover between fluids during operation. Reducing or eliminating carryover can include: (1) reducing or eliminating a volume of fluid being carried over, and/or (2) reducing or eliminating the number of instances in which carryover occurs. For example, systems of the invention may be configured to reduce carryover by 80% or more, such as 85% or more, such as 90% or more, such as 95% or more such as 97% or more, such as 98% or more, such as by 99% or more, and including by 100%. Put another way, the fluid supply system may be configured to allow for 100% swept cleaning thereof. The fluid supply system may be configured such that an operating fluid (e.g., sheath fluid) and the one or more primary flushing fluids or secondary fluids flow through the same fluid pathway(s).

The fluid supply systems of the present disclosure may be configured to supply fluid to a fluidic component of an instrument, e.g., a flow cell. The fluid supply system may be fluidically coupled to the input of the fluidic component (e.g., flow cell). The fluid supply system may be configured to alternatively supply (a) an operating fluid or (b) one or more of a primary flushing fluid and secondary fluid(s) to the input of the fluidic component. By "alternatively supply" is meant that the fluid supply system is configured in a manner such that it is capable of supplying (a) the operating fluid to the input of the flow cell and is capable of supplying (b) one or more of a primary flushing fluid and secondary fluid(s) to the input of the flow cell but only one of (a) the operating fluid and (b) the one or more of the primary flushing fluid and secondary fluid(s) may be supplied at a time. For example, the fluid supply system may be configured in a manner where it is capable of supplying (a) an operating fluid to the input of the fluidic component and is capable of supplying (b) one or more primary flushing or secondary fluids to the input of the fluidic component but either (a) the operating fluid is supplied in some instances or (b) the one or more primary flushing or secondary fluids are supplied in other instances. The fluid supply subsystem may be configured to alternatively fluidically couple: (a) an operating fluid reservoir or (b) one or more primary flushing fluid and/or secondary fluid reservoirs to the input of the fluidic component. By "alternatively fluidically couple" is meant that the fluid supply system is configured in a manner such that it is capable of fluidically coupling (a) the operating fluid reservoir to the input of the fluidic component and is capable of fluidically coupling (b) one or more of the primary flushing fluid and/or secondary fluid reservoirs to the input of the fluidic component but only one of (a) the operating fluid reservoir and (b) the one or more primary flushing fluid and/or secondary fluid reservoirs may be fluidically coupled to the input of the fluidic component at a time. In some cases, the fluidic coupling may be automatic/automated, such that no user intervention is required. Such automation may be achieved, e.g., using processor-controlled valves.

Fluid supply systems of the invention include an operating fluid line configured to transport an operating fluid therethrough from a proximal end to a distal end. The operating fluid line may be comprised of, e.g., tubing or conduit and may be manufactured from any convenient material. Materials of interest include, but are not limited to, polymeric materials such as plastic materials. In some cases, the operating fluid line is comprised of polyether ether ketone (PEEK), polytetrafluoroethylene (PTFE), Tygon, fluorinated ethylene-propylene (FEP), ethylene tetrafluoroethylene (ETFE), polypropylene (PP), polyethylene (PE), and the like, as well as combinations thereof. The operating fluid line may be characterized by any convenient inner diameter (i.e., diameter of the inside of the operating fluid line), outer diameter (i.e., diameter of the outside of the operating fluid line), wall thickness, and length. In some cases, the inner diameter of the operating fluid line ranges from 0.2 mm to 10 mm, including 1 mm to 5 mm. In some cases, the outer diameter of the operating fluid line ranges from 0.2 mm to 10 mm, including 1 mm to 5 mm. Operating fluid lines of the invention additionally include an operating fluid reservoir connector at the proximal end configured to fluidically couple to an operating fluid reservoir comprising the operating fluid. By "fluidically couple" it is meant couple in a manner sufficient to permit the passage of fluid. Any suitable connector may be included. Exemplary connectors include, e.g., quick disconnect connectors, threaded connectors, luer connectors, multiport connectors, tri clamp fittings, and puncture and seal sterile fittings. Suitable quick disconnect connectors include, but are not limited to, snap-type (ball-latching) connectors, bayonet connectors, threaded connectors, non-latching connectors, single-shutoff connectors, double-shutoff connectors, non-shutoff connectors, dry break connectors, roller lock connectors, pin lock connectors, ring lock connectors, and cam lock connectors.

The operating fluid reservoir may be any suitable reservoir or container (e.g., having rigid or flexible walls) for holding an operating fluid. The operating fluid can vary but in some cases is a sheath fluid. Sheath fluids may include, e.g., phosphate-buffered saline (PBS), HEPES-buffered saline, sodium fluoride (NaF), and the like, as well as combinations thereof. The operating fluid reservoir may have a volume ranging from 1 L to 100 L; for example, the volume of the container may range from 1 L to 90 L, from 1 L to 80 L, from 1 L to 70 L, from 1 L to 60 L, from 1 L to 50 L, from 1 L to 40 L, from 1 L to 30 L, from 1 L to 20 L, or from 1 L to 10 L. In some cases, the operating fluid reservoir connector is configured to detachably connect to the operating fluid reservoir. By "detachably connect" is meant that a connector may be attached to and then subsequently at some point be detached from a second connector, e.g., mating connector, as desired. In some embodiments, the operating fluid reservoir connector provides a sterile connection with the operating fluid reservoir. By "sterile" is meant that the connection is isolated from live bacteria or other microorganisms that are present in the ambient environment. Where desired, the operating fluid reservoir, e.g., sheath fluid container, may be cleaned separately, such as, e.g., by using an autoclaving cycle.

The subject fluid supply systems additionally include a primary flushing fluid line configured to transport a primary flushing fluid therethrough from a proximal end to a distal end. The primary flushing fluid line may be comprised of, e.g., tubing or conduit and may be manufactured from any convenient material. Materials of interest include, but are not limited to, polymeric materials such as plastic materials. In some cases, the operating fluid line is comprised of polyether ether ketone (PEEK), polytetrafluoroethylene (PTFE), Tygon, fluorinated ethylene-propylene (FEP), ethylene tetrafluoroethylene (ETFE), polypropylene (PP), polyethylene (PE),and the like, as well as combinations thereof. The primary flushing fluid line may be characterized by any convenient inner diameter (i.e., diameter of the inside of the primary flushing fluid line), outer diameter (i.e., diameter of the outside of the primary flushing fluid line), wall thickness, and length. In some cases, the inner diameter of the primary flushing fluid line ranges from 0.2 mm to 10 mm, including 1 mm to 5 mm. In some cases, the outer diameter of the primary flushing fluid line ranges from 0.2 mm to 10 mm, including 1 mm to 5 mm. Primary flushing fluid lines of the invention additionally include a primary flushing fluid reservoir connector at the proximal end configured to fluidically couple to a primary flushing fluid reservoir comprising the primary flushing fluid. Any suitable connector may be included. Exemplary connectors include, e.g., quick disconnect connectors, threaded connectors, luer connectors, multiport connectors, tri clamp fittings, and puncture and seal sterile fittings. Suitable quick disconnect connectors include, but are not limited to, snap-type (ball-latching) connectors, bayonet connectors, threaded connectors, non-latching connectors, single-shutoff connectors, double-shutoff connectors, non-shutoff connectors, dry break connectors, roller lock connectors, pin lock connectors, ring lock connectors, and cam lock connectors.

The primary flushing fluid reservoir may be any suitable reservoir or container (e.g., having rigid or flexible walls) for holding a primary flushing fluid. The primary flushing fluid may vary. In some cases, the primary flushing fluid is an inert fluid. By "inert" fluid it is meant a fluid that is not reactive. In some embodiments, the primary flushing fluid is miscible with other fluids employed in the invention (e.g., operating fluid, secondary fluid(s)), such that when the primary flushing fluid is used to flush the fluid supply system, any residual operating or secondary fluids are carried out of the fluid supply system in the primary flushing fluid. Exemplary primary flushing fluids include, e.g., de-ionized water or saline solutions (phosphate buffered saline, HEPES-buffered saline, sodium fluoride solutions, etc.). The primary flushing fluid reservoir may have a volume ranging from 1 L to 100 L; for example, the volume of the container may range from 1 L to 90 L, from 1 L to 80 L, from 1 L to 70 L, from 1 L to 60 L, from 1 L to 50 L, from 1 L to 40 L, from 1 L to 30 L, from 1 L to 20 L, or from 1 L to 10 L. In some cases, the primary flushing fluid reservoir connector is configured to detachably connect to the primary flushing fluid reservoir. In some embodiments, the primary flushing fluid reservoir connector provides a sterile connection with the operating fluid reservoir. Where desired, the primary flushing fluid reservoir may be cleaned separately, such as, e.g., by using an autoclaving cycle.

Fluid supply systems of the invention also include a secondary fluid line configured to transport a secondary fluid therethrough from a proximal end to a distal end. The secondary fluid line may be comprised of, e.g., tubing or conduit and may be manufactured from any convenient material. Materials of interest include, but are not limited to, polymeric materials such as plastic materials. In some cases, the operating fluid line is comprised of polyether ether ketone (PEEK), polytetrafluoroethylene (PTFE), Tygon, fluorinated ethylene-propylene (FEP), ethylene tetrafluoroethylene (ETFE), polypropylene (PP), polyethylene (PE), and the like, as well as combinations thereof. The secondary fluid line may be characterized by any convenient inner diameter (i.e., diameter of the inside of the secondary fluid line), outer diameter (i.e., diameter of the outside of the secondary fluid line), wall thickness, and length. In some cases, the inner diameter of the secondary fluid line ranges from 0.2 mm to 10 mm, including 1 mm to 5 mm. In some cases, the outer diameter of the secondary fluid line ranges from 0.2 mm to 10 mm, including 1 mm to 5 mm. Secondary fluid lines of the invention additionally include a secondary fluid reservoir connector at the proximal end configured to fluidically couple to a secondary fluid reservoir comprising the secondary fluid. Any suitable connector may be included. Exemplary connectors include, e.g., quick disconnect connectors, threaded connectors, luer connectors, multiport connectors, tri clamp fittings, and puncture and seal sterile fittings. Suitable quick disconnect connectors include, but are not limited to, snap-type (ball-latching) connectors, bayonet connectors, threaded connectors, non-latching connectors, single-shutoff connectors, double-shutoff connectors, non-shutoff connectors, dry break connectors, roller lock connectors, pin lock connectors, ring lock connectors, and cam lock connectors.

The secondary fluid reservoir may be any suitable reservoir or container (e.g., having rigid or flexible walls) for holding a secondary fluid. The secondary fluid may vary. Secondary fluids may include, e.g., cleaning fluids, buffers, calibrating solutions, setup bead solutions, etc. In some cases, the secondary fluid is selected from a cleaning fluid and a reagent. Where the secondary fluid is a cleaning fluid, any fluid suitable for sanitizing the fluid supply system and/or the fluidic component/instrument connected thereto may be included. In some embodiments, the cleaning fluid possesses germicidal and/or antibacterial properties. Where the secondary fluid is a reagent, any reagent suitable for use in a flow-type microfluidic environment may be employed. The secondary fluid reservoir may have a volume ranging from 1 L to 100 L; for example, the volume of the container may range from 1 L to 90 L, from 1 L to 80 L, from 1 L to 70 L, from 1 L to 60 L, from 1 L to 50 L, from 1 L to 40 L, from 1 L to 30 L, from 1 L to 20 L, or from 1 L to 10 L. In some cases, the secondary fluid reservoir connector is configured to detachably connect to the secondary fluid reservoir. In some embodiments, the secondary fluid reservoir connector provides a sterile connection with the secondary fluid reservoir. Where desired, the secondary fluid reservoir may be cleaned separately, such as, e.g., by using an autoclaving cycle.

Embodiments of the fluid supply systems include a plurality of secondary fluid lines and/or secondary fluid reservoirs. In some embodiments, the number of secondary fluid lines in the fluid supply systems ranges from 2 to 15, such as 2 to 10, and including 2 to 5. In certain versions, fluid supply systems include 2 or more secondary fluid lines, such as 3 or more secondary fluid lines, such as 4 or more secondary fluid lines, such as 5 or more secondary fluid lines, such as 6 or more secondary fluid lines, such as 7 or more secondary fluid lines, such as 8 or more secondary fluid lines, such as 9 or more secondary fluid lines, and including 10 or more secondary fluid lines. In some instances, each secondary fluid line in the fluid supply system is operably connected to a secondary fluid reservoir. The fluid the secondary fluid reservoirs may be the same or different. In one example including 3 secondary fluid lines and secondary fluid reservoirs, a first secondary fluid reservoir includes a cleaning fluid, a second secondary fluid reservoir includes a reagent, and a third secondary fluid reservoir includes a different reagent.

Systems of the invention additionally include a flow control circuit fluidically connected to the distal end of the primary flushing fluid line and the distal end(s) of the secondary fluid line(s). The flow control circuit of the invention is configured to selectively permit passage of the primary flushing fluid and the secondary fluid(s) through an outlet. In other words, the flow control circuit of the invention may be configured to permit passage of certain fluids while preventing the passage of other fluids. In some cases, the flow control circuit is configured to permit the passage of a single (i.e., 1) fluid at a given time. In other cases, the flow control circuit is configured to permit the passage of multiple fluids while preventing the passage of other fluids. The mechanism by which the selective permission of fluids is achieved may vary. In some versions, the flow control circuit comprises a bank of valves. The number of valves in the bank can range from, e.g., 3 to 10, including 4 to 6. In some instances, the bank includes 2 or more valves, such as 3 or more valves, such as 4 or more valves, such as 5 or more valves, such as 6 or more valves, such as 7 or more valves, such as 8 or more valves, such as 9 or more valves, and including 10 or more valves. In some versions, the flow control circuit comprises a bank of two-way valves (i.e., valves having one inlet and one outlet). In some such versions, the fluid control circuit includes one valve per primary flushing fluid reservoir and secondary fluid reservoir. In other embodiments, the flow control circuit comprises a bank of three-way valves. In some such embodiments, the primary flushing fluid line shares a connection with a secondary fluid line via a three-way valve. An additional three-way valve may be added for each additional secondary fluid. In some cases, the valves (e.g., two-way valves, three-way valves) are standalone valves. By "standalone" valves, it is meant that each valve in the bank is a separate entity and that they are not mounted on the same substrate (e.g., manifold). In other cases, the valves (e.g., two-way valves, three-way valves) are mounted on a manifold. Put another way, the flow control circuit may be comprised of a manifold valve comprised of individual valves. In some embodiments, the distal end of the primary flushing fluid line is fluidically coupled to a valve in the bank of valves that is furthest from the outlet of the flow control circuit. The outlet of the flow control circuit may be defined as the location at which fluid exits the valve most proximate to the single fluidic connection with respect to the fluidic path, or a position proximate to this location. In other words, the inert flushing fluid connection is furthest away from the flow control circuit outlet such that maximum flushing of the other pathways is achieved to minimize dead volume and fluid carry over between running different fluids.

In other cases, the flow control circuit comprises a multi-port selection valve. The multi-port selection valve discussed herein may include 3 or more ports, such as 4 or more ports, such as 5 or more ports, such as 6 or more ports, such as 7 or more ports, such as 8 or more ports, such as 9 or more ports, and including 10 or more ports. The multi-port selection valve described herein may be configured to selectively allow access between ports. For example, the multi-port selection valve may be connected to the primary flushing fluid line and the one or more secondary fluid lines, but only allow passage of one type of fluid at a time. In some embodiments, the multi-port selection valve has a low internal volume, such as where the multi-port selection valve has an internal volume ranging from 5 mm³ to 1,000 mm³, such as 20 mm³ to 100 mm³, and including 500 mm³ to 1000 mm³. The low internal volume may ensure that the entirety of the multi-port selection valve is fully swept by the primary flushing fluid and/or secondary fluid.

Fluid supply systems of the invention also include a single fluidic connection configured to fluidically couple to the flow control circuit, the operating fluid line, and a fluidic component of an instrument. By "single" fluidic connection, it is meant that fluid from the flow control circuit and the operating fluid line pass through the same fluidic connection. In other words, there does not exist another fluidic path through which fluid from the flow control circuit and the operating fluid line may pass before being supplied to the fluidic component of the instrument. In other words, the single fluidic connection is shared between the operating fluid reservoir and the flow control circuit, with no additional and uncleanable tubing or pathway between the operating fluid reservoir and the fluidic connection. This allows the primary flushing fluid and/or secondary fluid to flush 100% of the pathway between the operating fluid reservoir and the instrument for very low carryover. The single fluidic connection may take any suitable form. In some cases, the single fluidic connection is a quick connect fluid connector. In some such cases, the single fluidic connection may be manually changed between the operating fluid reservoir and flow control circuit. Suitable connectors include, but are not limited to, snap-type (ball-latching) connectors, bayonet connectors, threaded connectors, non-latching connectors, single-shutoff connectors, double-shutoff connectors, non-shutoff connectors, dry break connectors, roller lock connectors, pin lock connectors, ring lock connectors, and cam lock connectors. In other cases, the single fluidic connection is a valve, such as a three-way valve. In some embodiments, the three-way valve has a low internal volume, such as where the three-way valve has an internal volume ranging from 5 mm³ to 100 mm³, such as 15 mm³ to 30 mm³, and including 50 mm³ to 80 mm³. The low internal volume may ensure that the entirety of the three-way valve is fully swept by the primary flushing fluid and/or secondary fluid. In certain instances where the single fluidic connection is a valve, the valve may be configured for automated selection, i.e., such that selection may be made between the operating fluid reservoir and the fluid control circuit without manual intervention.

In some cases, fluid supply systems include a fluid supply pump operably connected to the flow control circuit and the single fluidic connection. The fluid supply pump may be configured to draw fluid from any one of the primary flushing fluid reservoir and the secondary fluid reservoir(s), depending on the setting of the flow control circuit. In some cases, the fluid supply pump is a positive displacement pump. As used herein, a "positive displacement pump" refers to pumps that move fluid by trapping a fixed amount of fluid and forcing (displacing) that trapped volume out of the device, where such pumps may operate with a series of working cycles, each cycle trapping a certain volume of fluid and moving the fluid mechanically through the pump and into a fluidic system. Positive displacement pumps that may be employed include, but are not limited to: rotary-type positive displacement pumps, such as peristaltic pumps, internal gear pumps, screw pumps, shuttle block pumps, flexible vane or sliding vane pumps, circumferential piston pumps, flexible impeller pumps, helical twisted roots pumps or liquid-ring pumps; reciprocating-type positive displacement pumps, such as piston pumps, plunger pumps or diaphragm pumps; and linear-type positive displacement pumps, such as rope pumps and chain pumps. In certain embodiments, the positive displacement pump includes a pump selected from the group consisting of a peristaltic pump, gear pump and a diaphragm pump. In some instances, the positive displacement pump is a peristaltic pump.

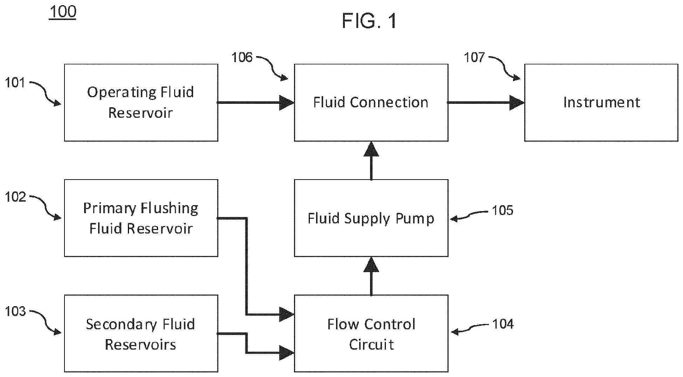

**FIG. 1** presents a block diagram of a fluid supply system according to certain embodiments of the invention. Fluid supply system 100 includes operating fluid reservoir 101, primary flushing fluid reservoir 102, and set of secondary fluid reservoirs 103. Both primary flushing fluid reservoir 102 and secondary fluid reservoirs 103 are fluidically connected to flow control circuit 104, which is configured to selectively permit passage of the primary flushing fluid and the secondary fluid through an outlet. The outlet of flow control circuit 104 is fluidically coupled to fluid supply pump 105, which draws fluid from primary flushing fluid reservoir 104 or one of secondary fluid reservoirs 103 depending on the setting of flow control circuit 104. Fluid supply system 100 additionally includes single fluidic connection 106, which may be fluidically connected to flow control circuit 104 (via fluid supply pump 105) and operating fluid reservoir 101. Single fluidic connection 106 permits the passage of either operating fluid from operating fluid reservoir 101 or fluid from flow control circuit 104 to instrument 107, but not both.

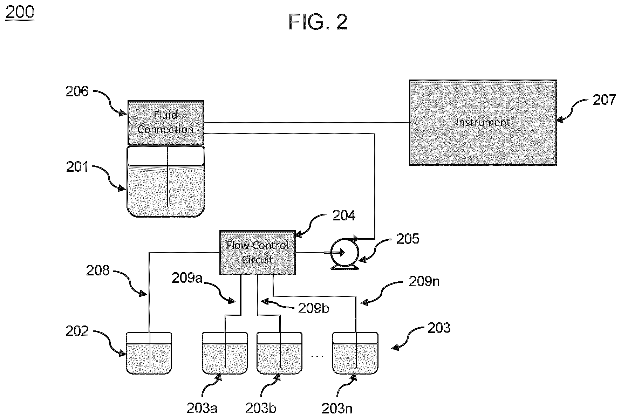

**FIG. 2** presents a fluid flow diagram of a fluid supply system according to certain embodiments of the invention. Fluid supply system 200 includes operating fluid reservoir 201, primary flushing fluid reservoir 202, and set of secondary fluid reservoirs 203. Shown in set of secondary fluid reservoirs 203 are first secondary fluid reservoir 203a, second secondary fluid reservoir 203b, and nth secondary fluid reservoir 203n. The number of second secondary fluid reservoirs in set of secondary fluid reservoirs 203 may vary such that n ranges from, e.g., 3 to 10. Primary flushing fluid line 208 fluidically couples primary flushing fluid reservoir 202 to flow control circuit 204, while secondary fluid lines 209a, 209b and 209n fluidically couple first secondary fluid reservoir 203a, second secondary fluid reservoir 203b, and nth secondary fluid reservoir 203n, respectively to flow control circuit 204. It is understood that additional lines may exist between 209b and 209n depending on the number of secondary fluid reservoirs in set 203. The outlet of flow control circuit 204 is fluidically coupled to fluid supply pump 205, which draws fluid from primary flushing fluid reservoir 204 or one of the secondary fluid reservoirs in set 203 depending on the setting of flow control circuit 204. Fluid supply system 200 additionally includes single fluidic connection 206, which may be fluidically connected to flow control circuit 204 (via fluid supply pump 205) and operating fluid reservoir 201. Single fluidic connection 206 permits the passage of either operating fluid from operating fluid reservoir 201 or fluid from flow control circuit 204 to instrument 207 at a given time, but not both.

Systems of the invention may be configured to drive operating fluid to a fluidic component of an instrument (e.g., flow cell) via any suitable means. Embodiments of the systems include a pressurized air source operably connected to the operating fluid reservoir. In such embodiments, the pressurized air source may be employed to apply positive pressure to the operating fluid reservoir and thereby drive the operating fluid contained therein through the fluid supply system, e.g., to the fluidic component of the instrument. Pressurized air sources include, e.g., compressors and canisters comprising a gas under pressure. Any suitable compressor may be included. In some embodiments, the compressor is a positive displacement compressor such as a rotary compressor (e.g., lobe compressor, screw compressor, liquid ring compressor, scroll compressor, vane compressor) or a reciprocating compressor (e.g., diaphragm compressor, double acting compressor, single acting compressor). In other cases, the compressor is a dynamic compressor, such as a centrifugal compressor or an axial compressor. Systems may additionally include a pressure regulator operably connected to the operating fluid reservoir and the pressurized air source. Any suitable pressure regulator may be employed, and can include, e.g., a poppet-style valved regulator, a diaphragm chamber regulator, a balanced poppet regulator, and a precision regulator. Regulators of interest may be configured to adjust the pressure of the pressurized air being applied to the operating fluid reservoir and thereby adjust the flow rate of the flow stream.

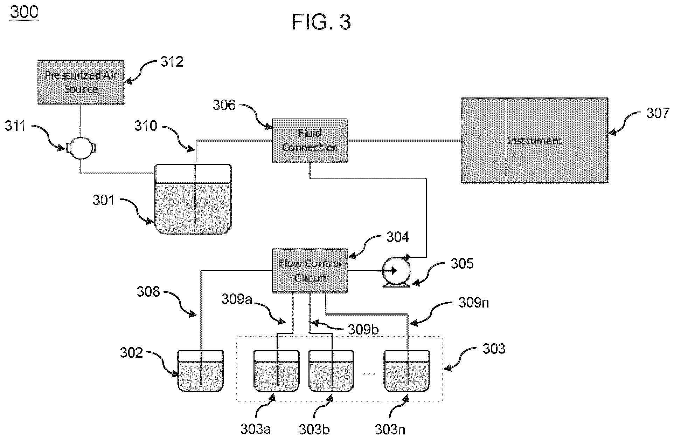

**FIG. 3** presents a fluid flow diagram of a fluid supply system 300 driven by pressurized air over liquid according to certain embodiments of the invention. Fluid supply system 300 includes operating fluid reservoir 301, primary flushing fluid reservoir 302, set of secondary fluid reservoirs 303 (including secondary fluid reservoirs 303a, 303b and 303n), primary flushing fluid line 308, secondary fluid lines 309a-309n, flow control circuit 304, fluid supply pump 305, single fluid connection 306, instrument 307, and operating fluid line 310. The aforementioned elements are arranged as described above with respect to **FIG. 2****.** Fluid supply system 300 also includes pressurized air source 312 and pressure regulator 311. Pressurized air source 312 is operably connected to operating fluid reservoir 301 and is configured to drive operating fluid therein through operating fluid line 310, through single fluidic connection 306, to instrument 307. Pressure regulator 311 is configured to control the amount of pressure applied and the flow rate of operating fluid.

In additional cases, systems include an operating fluid supply pump configured to draw fluid from the operating fluid reservoir and supply said operating fluid to the fluidic component (e.g., flow cell) of the instrument. The operating fluid supply pump may be a positive displacement pump. Positive displacement pumps that may be employed include, but are not limited to: rotary-type positive displacement pumps, such as peristaltic pumps, internal gear pumps, screw pumps, shuttle block pumps, flexible vane or sliding vane pumps, circumferential piston pumps, flexible impeller pumps, helical twisted roots pumps or liquid-ring pumps; reciprocating-type positive displacement pumps, such as piston pumps, plunger pumps or diaphragm pumps; and linear-type positive displacement pumps, such as rope pumps and chain pumps. In certain embodiments, the positive displacement pump includes a pump selected from the group consisting of a peristaltic pump, gear pump and a diaphragm pump. In some instances, the positive displacement pump is a peristaltic pump.

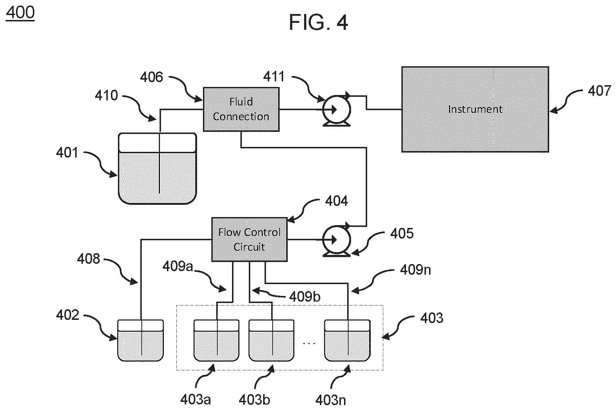

**FIG. 4** presents a fluid flow diagram of a fluid supply system 400 having an operating fluid supply pump according to certain embodiments of the invention. Fluid supply system 400 includes operating fluid reservoir 401, primary flushing fluid reservoir 402, set of secondary fluid reservoirs 403 (including secondary fluid reservoirs 403a, 403b and 403n), primary flushing fluid line 408, secondary fluid lines 409a-409n, flow control circuit 404, fluid supply pump 405, single fluid connection 406, instrument 407, and operating fluid line 410. The aforementioned elements are arranged as described above with respect to **FIG. 2****.** Fluid supply system 400 also include operating fluid supply pump 411 located between instrument 407 and single fluid connection 406. Operating fluid supply pump 411 is configured to draw operating fluid from operating fluid reservoir 401 and provide it to instrument 407.

In other cases, the fluid supply systems include a vacuum source operably connected to the fluidic component of the instrument. In some cases, the vacuum source is a pump. The vacuum source may be located on the opposite side of the fluidic component (e.g., flow cell) of the instrument relative to the single fluidic connection such that the vacuum generated by the vacuum source draws operating fluid out of the operating fluid reservoir, through the single fluidic connection and through the fluidic component of the instrument (e.g., flow cell). Any pump suitable for generating a vacuum capable of driving fluid from the operating fluid reservoir may be employed, including but not limited to pumps described herein.

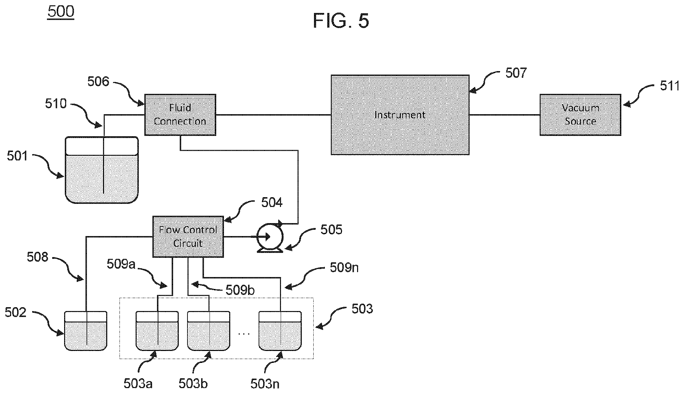

**FIG. 5** presents a fluid flow diagram of a fluid supply system 500 having a vacuum source according to certain embodiments of the invention. Fluid supply system 500 includes operating fluid reservoir 501, primary flushing fluid reservoir 502, set of secondary fluid reservoirs 503 (including secondary fluid reservoirs 503a, 503b and 503n), primary flushing fluid line 508, secondary fluid lines 509a-509n, flow control circuit 504, fluid supply pump 505, single fluid connection 506, instrument 507, and operating fluid line 510. The aforementioned elements are arranged as described above with respect to **FIG. 2****.** Fluid supply system 500 additionally includes vacuum source 511 located on the opposite side of instrument 507 relative to the single fluidic connection such that the vacuum generated by the vacuum source 511 draws operating fluid out of the operating fluid reservoir 501, through the single fluidic connection 506 and through instrument 507.

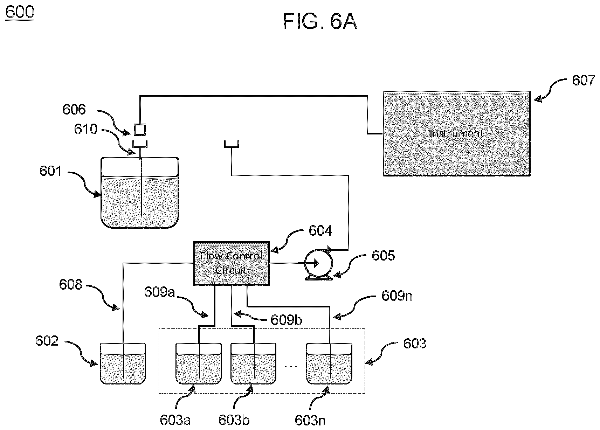

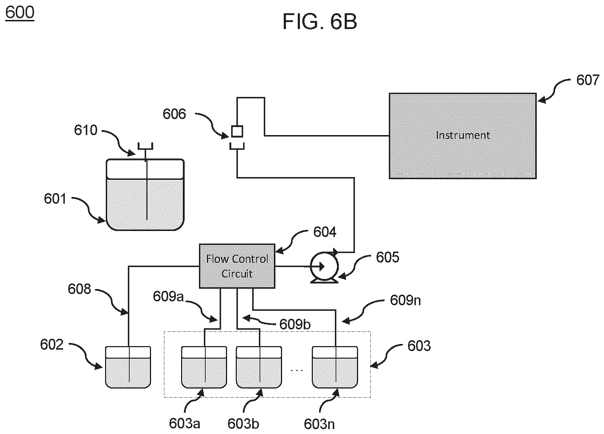

**FIGS. 6A-6B** present a fluid flow diagram of a fluid supply system 600 having a single fluidic connection comprised of a quick connect fluid connector according to certain embodiments of the invention. Fluid supply system 600 includes operating fluid reservoir 601, primary flushing fluid reservoir 602, set of secondary fluid reservoirs 603 (including secondary fluid reservoirs 603a, 603b and 603n), primary flushing fluid line 608, secondary fluid lines 609a-609n, flow control circuit 604, fluid supply pump 605, instrument 607, and operating fluid line 610. The aforementioned elements are arranged as described above with respect to **FIG. 2****.** Fluid supply system 600 additionally includes a single fluidic connection comprised of quick connect fluid connector 606, which may be fluidically coupled to either operating fluid reservoir 601 or flow control circuit 604 at a given time. **FIG. 6A** shows quick connect fluid connector 606 fluidically coupled to operating fluid reservoir 601, while **FIG. 6B** shows quick connect fluid connector 606 fluidically coupled to flow control circuit 604.

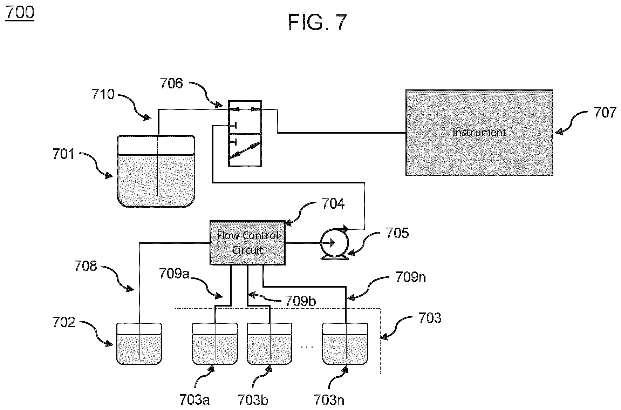

**FIG. 7** presents a fluid flow diagram of a fluid supply system 700 having a single fluidic connection comprised of a three-way valve according to certain embodiments of the invention. Fluid supply system 700 includes operating fluid reservoir 701, primary flushing fluid reservoir 702, set of secondary fluid reservoirs 703 (including secondary fluid reservoirs 703a, 703b and 703n), primary flushing fluid line 708, secondary fluid lines 709a-709n, flow control circuit 704, fluid supply pump 705, instrument 707, and operating fluid line 710. The aforementioned elements are arranged as described above with respect to **FIG. 2****.** Fluid supply system 700 additionally includes a single fluidic connection 706 comprised of three-way valve 706. The three-way valve 706 has 2 inlets-one fluidically coupled to each of the operating fluid reservoir 701 and flow control circuit 704-and an outlet fluidically coupled to instrument 707. Depending on the setting of three-way valve 706, fluid from either the operating fluid reservoir 701 or the flow control circuit 704 may be provided to instrument 707. In some cases, three-way valve 706 may be automatically controlled, e.g., by a processor.

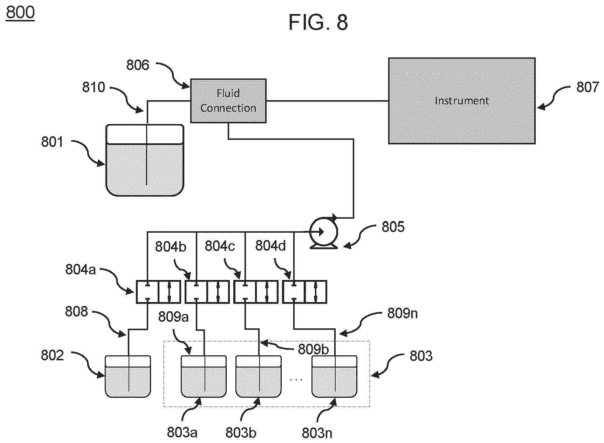

**FIG. 8** presents a fluid flow diagram of a fluid supply system 800 having a flow control circuit comprised of a bank of standalone two-way valves according to certain embodiments of the invention. Fluid supply system 800 includes operating fluid reservoir 801, primary flushing fluid reservoir 802, set of secondary fluid reservoirs 803 (including secondary fluid reservoirs 803a, 803b and 803n), primary flushing fluid line 808, secondary fluid lines 809a-809n, fluid supply pump 805, single fluid connection 806, instrument 807, and operating fluid line 810. The aforementioned elements are arranged as described above with respect to **FIG. 2****.** Fluid supply system 800 additionally includes a flow control circuit comprised of a bank of standalone two-way valves 804a-804d. Each of two-way valves 804a-804d may be individually actuatable such that fluid may be provided from the respective reservoir when the valve is open, while this is prevented when the valve is closed. The opening and closing of the valves may in some cases be automatically controlled, e.g., by a processor. It is to be understood that one or more additional secondary fluid reservoirs and secondary fluid lines may be included in fluid supply system 800 (e.g., as discussed above). If this is the case, an additional two-way valve may be included for each additional secondary fluid reservoir and secondary fluid line. As shown in **FIG. 8****,** the primary flushing fluid line 808 is fluidically coupled to a valve 804a in the bank of valves that is furthest from the outlet of the flow control circuit (i.e., where valves 804a-804d fluidically connect to fluid supply pump 805). This ensures that the fluidic lines in the flow control circuit are fully swept by the primary flushing fluid.

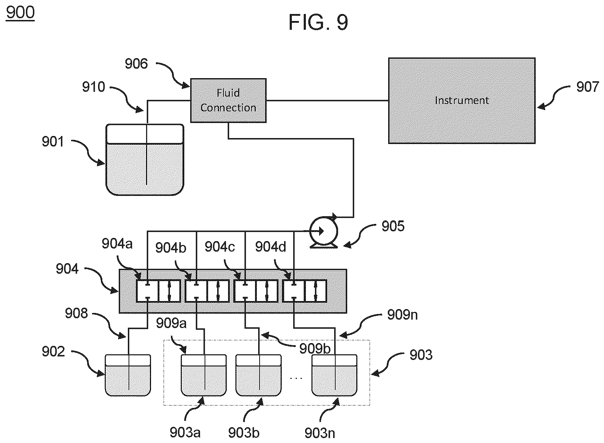

**FIG. 9** presents a fluid flow diagram of a fluid supply system 900 having a flow control circuit comprised of a bank of common-mounted two-way valves according to certain embodiments of the invention. Fluid supply system 900 includes operating fluid reservoir 901, primary flushing fluid reservoir 902, set of secondary fluid reservoirs 903 (including secondary fluid reservoirs 903a, 903b and 903n), primary flushing fluid line 908, secondary fluid lines 909a-909n, fluid supply pump 905, single fluid connection 906, instrument 907, and operating fluid line 910. The aforementioned elements are arranged as described above with respect to **FIG. 2****.** Fluid supply system 900 additionally includes a flow control circuit comprised of a bank of two-way valves 904a-904d mounted on manifold 904. Each of two-way valves 904a-904d may be individually actuatable such that fluid may be provided from the respective reservoir when the valve is open, while this is prevented when the valve is closed. The opening and closing of the valves may in some cases be automatically controlled, e.g., by a processor. It is to be understood that one or more additional secondary fluid reservoirs and secondary fluid lines may be included in fluid supply system 900 (e.g., as discussed above). If this is the case, an additional two-way valve may be included on manifold 904 for each additional secondary fluid reservoir and secondary fluid line. As shown in **FIG. 9****,** the primary flushing fluid line 908 is fluidically coupled to a valve 904a in manifold 904 that is furthest from the outlet of the flow control circuit (i.e., where valves 904a-904d fluidically connect to fluid supply pump 905). This ensures that the fluidic lines in the flow control circuit are fully swept by the primary flushing fluid.

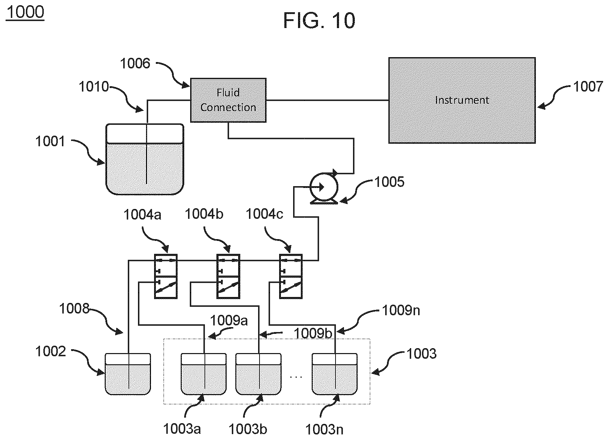

**FIG. 10** presents a fluid flow diagram of a fluid supply system 1000 having a flow control circuit comprised of a bank of standalone three-way valves according to certain embodiments of the invention. Fluid supply system 1000 includes operating fluid reservoir 1001, primary flushing fluid reservoir 1002, set of secondary fluid reservoirs 1003 (including secondary fluid reservoirs 1003a, 1003b and 1003n), primary flushing fluid line 1008, secondary fluid lines 1009a-1009n, fluid supply pump 1005, single fluid connection 1006, instrument 1007, and operating fluid line 1010. The aforementioned elements are arranged as described above with respect to **FIG. 2****.** Fluid supply system 1000 additionally includes a flow control circuit comprised of standalone three-way valves 1004a, 1004b, and 1004c. Three-way valve 1004a has one inlet fluidically coupled to primary flushing fluid reservoir 1002 via primary flushing fluid line 1008, and another fluidically coupled to secondary fluid reservoir 1003a. Three-way valve 1004b has one inlet fluidically coupled to the outlet of three-way valve 1004a and another fluidically coupled to secondary fluid reservoir 1003b via secondary fluid line 1009a. Three-way valve 1004c has one inlet fluidically coupled to the outlet of three-way valve 1004b and another fluidically coupled to secondary fluid reservoir 1003n via secondary fluid line 1009n. It is to be understood that one or more additional secondary fluid reservoirs and secondary fluid lines may be included in fluid supply system 1000 (e.g., as discussed above). If this is the case, an additional three-way valve may be included for each additional secondary fluid reservoir and secondary fluid line. Each of three-way valves 1004a-1004c may be individually actuatable such that fluid may be provided from the respective reservoir when the valve is open, while this is prevented when the valve is closed. As shown in **FIG. 10****,** the primary flushing fluid line 1008 is fluidically coupled to a valve 1004a that is furthest from the outlet of the flow control circuit (i.e., where valves 1004a-1004c fluidically connect to fluid supply pump 1005). This ensures that the fluidic lines in the flow control circuit are fully swept by the primary flushing fluid.

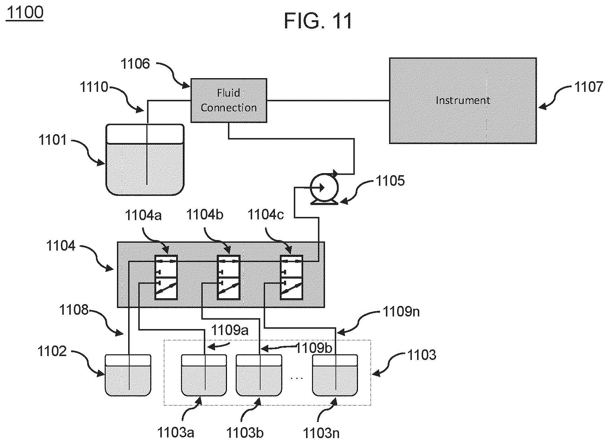

**FIG. 11** presents a fluid flow diagram of a fluid supply system 1100 having a flow control circuit comprised of a bank of three-way valves mounted on a manifold according to certain embodiments of the invention. Fluid supply system 1100 includes operating fluid reservoir 1101, primary flushing fluid reservoir 1102, set of secondary fluid reservoirs 1103 (including secondary fluid reservoirs 1103a, 1103b and 1103n), primary flushing fluid line 1108, secondary fluid lines 1109a-1 109n, fluid supply pump 1105, single fluid connection 1106, instrument 1107, and operating fluid line 1110. The aforementioned elements are arranged as described above with respect to **FIG. 2****.** Fluid supply system 1100 additionally includes a flow control circuit comprised of three-way valves 1104a, 1104b, and 1104c mounted on manifold 1104. Three-way valve 1104a has one inlet fluidically coupled to primary flushing fluid reservoir 1102 via primary flushing fluid line 1108, and another fluidically coupled to secondary fluid reservoir 1103a via secondary fluid line 1109a. Three-way valve 1104b has one inlet fluidically coupled to the outlet of three-way valve 1104a and another fluidically coupled to secondary fluid reservoir 1103b via secondary fluid line 1109b. Three-way valve 1104c has one inlet fluidically coupled to the outlet of three-way valve 1104b and another fluidically coupled to secondary fluid reservoir 1103n via secondary fluid line 1109n. It is to be understood that one or more additional secondary fluid reservoirs and secondary fluid lines may be included in fluid supply system 1100 (e.g., as discussed above). If this is the case, an additional three-way valve may be included on the manifold for each additional secondary fluid reservoir and secondary fluid line. Each of three-way valves 1104a-1104c may be individually actuatable such that fluid may be provided from the respective reservoir when the valve is open, while this is prevented when the valve is closed. As shown in **FIG. 11****,** the primary flushing fluid line 1108 is fluidically coupled to a valve 1104a that is furthest from the outlet of the flow control circuit (i.e., where valves 1104a-1104c fluidically connect to fluid supply pump 1105). This ensures that the fluidic lines in the flow control circuit are fully swept by the primary flushing fluid.

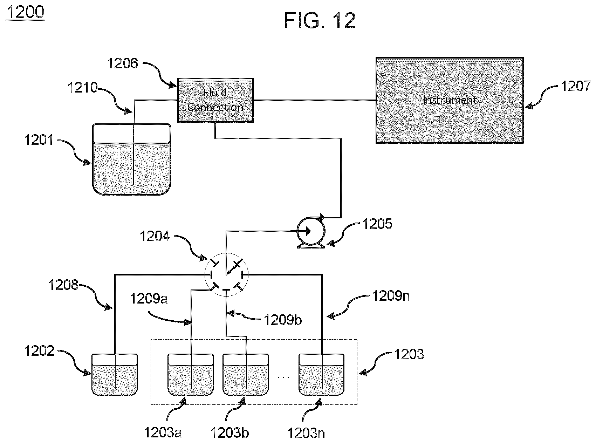

**FIG. 12** presents a fluid flow diagram of a fluid supply system 1200 having a flow control circuit comprised of a multi-port selection valve according to certain embodiments of the invention. Fluid supply system 1200 includes operating fluid reservoir 1201, primary flushing fluid reservoir 1202, set of secondary fluid reservoirs 1203 (including secondary fluid reservoirs 1203a, 1203b and 1203n), primary flushing fluid line 1208, secondary fluid lines 1209a-1209n, fluid supply pump 1205, single fluid connection 1206, instrument 1207, and operating fluid line 1210. The aforementioned elements are arranged as described above with respect to **FIG. 2****.** Fluid supply system 1200 additionally includes multi-port selection valve 1204 fluidically connected to primary flushing fluid reservoir 1202 via primary flushing fluid line 1208, secondary fluid reservoir 1203a via secondary fluid line 1209a, secondary fluid reservoir 1203b via secondary fluid line 1209b, secondary fluid reservoir 1203n via secondary fluid line 1203n, and the fluid supply pump 1205. Multi-port selection valve 1204 is configured to selectively route fluid from one of these fluidically coupled reservoirs at a given time. It is to be understood that one or more additional secondary fluid reservoirs and secondary fluid lines may be included in fluid supply system 1200 (e.g., as discussed above). If this is the case, these reservoirs and secondary fluid lines may likewise be fluidically coupled to multi-port selection valve 1204.

### FLUID MANAGEMENT SYSTEMS

Aspects of the invention additionally include a fluid management system comprising a fluid supply system of the invention. The term "fluid management system" refers to the totality of the fluidic components associated with an instrument, e.g., flow cytometer. The fluid management systems of the present disclosure may be configured to perform one or more functions including, but not limited to, supplying an operating fluid (e.g., sheath fluid) and sample fluid in a controlled ratio to a fluidic component (e.g., flow cell); supplying a primary flushing fluid to the fluidic component; supplying one or more secondary fluids (e.g., for cleaning or as a reagent) to the fluidic component; hydrodynamic focusing of a sample fluid using an operating fluid for sample interrogation through a cuvette; collecting an analyzed sample as waste; collecting waste from sorting a sample; and managing and storing all system waste; etc. The fluid management systems may include a flow cell comprising an input and output, a cuvette comprising an input coupled to the output of the flow cell and further comprising an output, a sample input line for fluidically coupling a sample fluid source to the input of the flow cell, and any of the fluid supply systems described herein. Exemplary fluid management systems that may be adapted to include the subject fluid supply systems include those described in U.S. Patent Application Publication No. 2022/0341838

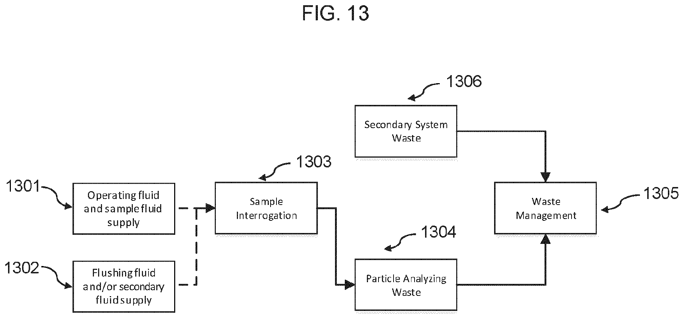

**FIG. 13** provides a flow chart of the primary functions of a fluid management system configured to analyze a sample, according to certain embodiments. The primary functions are: (1301) supplying an operating fluid (e.g., sheath) and sample fluid in a controlled ratio to a flow cell; (1302) supplying any number of primary flushing and secondary fluids (e.g., for cleaning); (1303) hydrodynamic focusing of the sample using the operating fluid for sample interrogation through a cuvette; (1304) collecting the analyzed sample as waste; and (1305) managing and storing all system waste (waste from particle analyzing 1304 and secondary system waste 1306). The dotted lines indicate that (a) operating fluid and sample fluid may be supplied to the flow cell or alternatively, (b) any number of secondary system fluids are supplied to the flow cell.

In certain embodiments, the fluid management system is configured to alternatively (a) analyze a sample (e.g., particles in sample fluid) or (b) analyze and sort a sample (e.g., particles in sample fluid). In such embodiments, the fluid management system may include all necessary components to (a) analyze a sample or (b) analyze and sort a sample but only one of (a) and (b) may be performed at a time. In some embodiments, the fluid management system is configured in a manner such that it is capable of (a) analyzing a sample and is capable of (b) analyzing and sorting a sample but either (a) analyzing a sample is performed in some instances or (b) analyzing and sorting a sample is performed in other instances.

Aspects of fluid management by the fluid management systems may be based on the fluid circuit principle. For example, the fundamental principle of operating fluid supply may be based upon the fluid circuit principle, where the pressure drop across a closed fluid pathway is assumed equal to the product of liquid flowrate and fluid resistance. Operating fluid (e.g., sheath) and sample pathways can be modeled as two resistors in parallel, combining to travel through a flow cell, cuvette, and waste path which are a third fluid resistor. Similarly, waste management using a single waste pump according to certain embodiments is based upon the fluid circuit principle. Every individual waste aspiration source can be modeled as a fluid reservoir at atmospheric pressure, and every connection (e.g., fluidic line) from these waste sources to the waste management system can be modeled as a fluid resistor. Given the supply vacuum of a waste pump, the fluid resistance of each connection can be controlled to balance the required waste aspiration of each waste source, as described further in detail below.

The waste fluids of a flow type particle analyzer of the present disclosure may be managed by a fluid movement device, according to certain embodiments. In some instances, the waste fluids of the fluid management system, e.g., the combined waste fluids, are managed by a single fluid movement device, e.g., a single waste pump. The combined waste fluid may be managed by a single fluid movement device, e.g., single waste pump, by having a proper balance of fluid resistances from all of the different waste sources of the system such as, e.g., analyzer waste, sorted waste, and secondary system waste. The waste sources may include, e.g., an analyzer waste fluid collection subsystem, a sorter waste fluid collection subsystem, and one or more system waste fluid sources. Connections (e.g., fluidic lines) from the waste sources may act as multiple fluid resistors in parallel with a single pressure source including the fluid movement device, e.g., waste vacuum pump. As long as the fluid movement device, e.g., waste vacuum pump, has sufficient capacity, the resistances can be tuned such that each waste source has proper vacuum. For example, the resistances of the flow paths (e.g., fluidic lines) that fluidically couple waste sources of the system to the fluid movement device may have known resistances that are balanced to allow for each waste source to have a proper vacuum for drawing waste fluid. In some instances, the resistance of a first fluidic line coupled to a first waste source among a plurality of fluidic lines coupling a plurality of waste sources to a fluid movement device may be adjusted or set to provide a proper vacuum for the first waste source. The resistance of a second fluidic line coupled to a second waste source among a plurality of fluidic lines coupling a plurality of waste sources to a fluid movement device may be adjusted or set to provide a proper vacuum for the second waste source. Resistances of additional fluidic lines in the system may further have individual resistances that are adjusted or set to provide a proper vacuum for each of the respective waste sources. The resistances of the fluidic lines from each of the waste sources may be the same or different. Each fluidic line fluidically coupling a waste source to the fluid movement device may have a particular known resistance such that each of the waste sources has proper vacuum. For example, resistances of fluidic lines coupling one or more of an analyzer waste fluid collection subsystem, a sorter waste fluid collection subsystem, and one or more system waste fluid sources to the fluid movement device may be balanced to allow for proper vacuum for each waste source and control of waste fluid aspiration by a single fluid movement device. In some instances, the resistances of a plurality of fluidic lines coupling a plurality of waste sources to a fluid movement device may be individually adjusted to provide a desired fluid flow rate from each respective waste source. For example, the resistance of a first fluidic line coupled to a first waste source among a plurality of fluidic lines coupling a plurality of waste sources to a fluid movement device may be adjusted or set to provide a desired first flow rate of waste fluid from the first waste source. The resistance of a second fluidic line coupled to a second waste source among a plurality of fluidic lines coupling a plurality of waste sources to a fluid movement device may be adjusted or set to provide a desired second flow rate of waste fluid from the second waste source. Resistances of additional fluidic lines in the system may further have individual resistances that are adjusted or set to provide a desired flow rate of waste fluid from each of the respective waste sources. The resistances of the fluidic lines from each of the waste sources may be the same or different. Each fluidic line fluidically coupling a waste source to the fluid movement device may have a particular known resistance based on the desired fluid flow rate from each of the waste sources. In some instances, the resistances of the flow paths (e.g., fluidic lines) in a fluid management system are fixed. In some instances, the resistances of the flow paths (e.g., fluidic lines) in a fluid management system are variable. In some instances, the resistance of one or more flow paths in the system may be independently variable, where, e.g., the resistance of each of the flow paths may be individually varied. In some instances, the system includes one or more variable resistors that may modulate the resistance of a flow path by, e.g., modulating a dimension of the flow path (e.g., diameter or length of a fluidic line). In some instances, the variable resistor includes a valve.

Fluid management systems of the present disclosure may further include one or more waste fluid collection subsystems. In some instances, a fluid management system includes an analyzer waste fluid collection subsystem configured to fluidically couple the output of the cuvette to a waste management subsystem; a sorter waste fluid collection subsystem configured to fluidically couple an output of a sort block coupled to the output of the cuvette to a waste management subsystem; or a combination thereof (e.g., in hybrid system where the flow type particle analyzer may (a) analyze a sample or alternatively (b) analyze and sort a sample).

The waste management subsystem may be configured to receive and combine waste fluids from: (a) one or more system waste fluid sources and (b) an analyzer waste fluid collection subsystem, a sorter waste fluid collection subsystem, or a combination thereof to produce a combined waste fluid. Fluid from a system waste fluid source may include waste fluid produced and/or collected from cleaning any part of the flow type particle analyzer. Fluid from an analyzer waste fluid collection subsystem may include analyzed waste fluid from the output of the cuvette which may include, e.g., analyzed sample fluid and operating fluid that has flown through the cuvette and been optically interrogated. Fluid from a sorter waste fluid collection subsystem may include waste fluid received and collected from an output of a sort block, e.g., an output of a sort nozzle. The waste fluid may include analyzed operating fluid and sample fluid (e.g., including particles not of interest) that was not conveyed, e.g., in droplets, to a sample collection container by one or more deflection plates of the sort block. In certain embodiments, the waste management subsystem is configured to receive and combine waste fluids from: (a) one or more system waste fluid sources and (b) an analyzer waste fluid collection subsystem to produce a combined waste fluid. In certain embodiments, the waste management subsystem is configured to receive and combine waste fluids from: (a) one or more system waste fluid sources and (b) a sorter waste fluid collection subsystem to produce a combined waste fluid. In certain embodiments, the waste management subsystem is configured to receive and combine waste fluids from: (a) one or more system waste fluid sources and (b) an analyzer waste fluid collection subsystem and a sorter waste fluid collection subsystem. In certain embodiments, the waste management subsystem is configured to receive and combine waste fluids from: (a) one or more system waste fluid sources and (b) an analyzer waste fluid collection subsystem or a sorter waste fluid collection subsystem.

The waste management subsystem may be fluidically coupled to (a) one or more system waste fluid sources and (b) an analyzer waste fluid collection subsystem, a sorter waste fluid collection subsystem, or a combination thereof. In certain embodiments, the waste management subsystem is fluidically coupled to (a) one or more system waste fluid sources and (b) an analyzer waste fluid collection subsystem. In certain embodiments, the waste management subsystem is fluidically coupled to (a) one or more system waste fluid sources and (b) a sorter waste fluid collection subsystem. In certain embodiments, the waste management subsystem is fluidically coupled to (a) one or more system waste fluid sources and (b) an analyzer waste fluid collection subsystem and a sorter waste fluid collection subsystem.

The waste management subsystem may include an output, e.g., a single output, for the combined waste fluid. In some instances, the output of the waste management subsystem is fluidically coupled to a waste fluid container. A fluidic line, e.g., a tube or conduit, may fluidically couple the output of the waste management subsystem to the waste container. In some instances, the output is fluidically coupled to the waste container with a single fluidic line. Combined waste fluid may be flowed out of the output and into the waste fluid container, e.g., for storage. The waste container may be fluidically coupled, e.g., via a fluidic line (e.g., a single fluidic line), to a fluid movement device configured to convey combined waste fluid from the output of the waste management subsystem to the waste fluid container. In some instances, the waste fluid container is detachable from a fluidic line that couples it to the fluid management system such that, e.g., the waste fluid container may be emptied and cleaned.

Where desired, the fluid management system may include a fluid movement device configured to convey, e.g., mechanically convey, the combined waste fluid to the waste fluid container. In some instances, the combined waste fluid is managed by a single fluid movement device, e.g., a single pump. In these embodiments, as there is only a single fluid movement device, the fluid management system does not include any other fluid movement devices that control or modulate the flow of the combined waste fluid to the waste container. In some embodiments, a single fluidic line may couple the output of the waste management subsystem to a waste container. In some embodiments, a single fluidic line may fluidically couple an output of the waste management system to a single fluid movement device which in turn is fluidically coupled to a waste fluid container with a single fluidic line. In some instances, the combined waste fluid is conveyed from the output of the waste management subsystem to the waste fluid container by a single fluid movement device, e.g., a single pump. In some instances, the fluid movement device is a vacuum source that draws the combined waste fluid from the output of the fluid management subsystem to the waste fluid container. In some instances, the fluid movement device conveys waste fluid from each of the subsystems or waste sources (e.g., analyzer waste fluid collection subsystem, sorter waste fluid collection subsystem, system waste fluid source(s)) to the waste management subsystem, e.g., to be combined, and then conveys the combined waste fluid to a waste container. In some instances, waste fluid from each of the subsystems or waste sources fluidically coupled to the waste management subsystem is managed by a single fluid movement device. In some instances, the fluid movement device is a vacuum source that draws the waste fluid from each of the subsystems or waste sources to the waste management subsystem. The fluid movement device may be fluidically coupled to an output of the waste management subsystem and a waste fluid container. The fluid movement device may be any fluid movement device as described herein. In some instances, the fluid movement device is a vacuum imparting device. In some instances, the fluid movement device includes a pump, e.g., a vacuum pump. In some instances, the fluid movement device is a single pump. In some instances, the pump includes a positive displacement vacuum pump. In some instances, the positive displacement vacuum pump includes a pump selected from the group consisting of a diaphragm pump, gear pump and a peristaltic pump. In some instances, the positive displacement vacuum pump is a diaphragm pump.

In some embodiments, the flow type particle analyzer includes a waste fluid container. The waste container may be any suitable reservoir or container (e.g., having rigid or flexible walls) for storing waste fluids. In some instances, the output of the waste management subsystem is fluidically coupled to the waste fluid container. In some instances, the waste container is fluidically coupled to a fluid movement device configured to convey combined waste fluids from the output of the waste management subsystem to the waste container. A fluidic line, e.g., a tube or conduit, may fluidically couple the output of the waste management subsystem to the waste container. In some instances, the output is fluidically coupled to the waste container with a single fluidic line. Combined waste fluid may be flowed out of the output and into the waste fluid container, e.g., for storage. The waste container may be fluidically coupled, e.g., via a fluidic line (e.g., a single fluidic line), to a fluid movement device configured to convey combined waste fluid from the output of the waste management subsystem to the waste fluid container. In some instances, the waste fluid container is detachable from a fluidic line that couples it to the fluid management system such that, e.g., the waste fluid container may be emptied and cleaned. The waste fluid container may be configured to, e.g., have a suitable volume to, contain and store all system fluids. The waste fluid container may have a volume ranging from 1 L to 100 L; for example, the volume of the container may range from 1 L to 90 L, from 1 L to 80 L, from 1 L to 70 L, from 1 L to 60 L, from 1 L to 50 L, from 1 L to 40 L, from 1 L to 30 L, from 1 L to 20 L, or from 1 L to 10 L.

The fluid management systems may include one or more system waste fluid sources fluidically coupled to the waste management subsystem. The one or more system waste fluid sources may produce and/or collect waste fluids from the cleaning of any region or location of the flow type particle analyzer. The one or more system waste fluid sources may be configured to convey or deliver system waste fluids to the waste management subsystem. In some instances, waste fluid from the one or more system waste fluid sources is drawn to the waste management subsystem by a vacuum created by a fluid movement device. The one or more waste fluid sources may be fluidically coupled to the waste management subsystem with a known fluid resistance. In some instances, one or more fluidic lines coupling the one or more system waste fluid sources to the waste management subsystem, e.g., each of the one or more fluidic lines, includes a resistor. The resistor(s) may provide a known fluid resistance in the one or more fluidic lines coupling the one or more system waste fluid sources to the waste management subsystem. Suitable resistors include, but are not limited to, a section of tubing with known length and internal diameter, an orifice, etc.

The fluid management systems of the present disclosure may further include an operating fluid pressure feedback control subsystem configured to control or regulate operating fluid pressure in the system, e.g., in an operating fluid reservoir. The operating fluid pressure may be controlled via regulated air pressure in the operating fluid reservoir. Pressurized operating fluid may flow from the operating fluid source through the fluid supply system to the flow cell. The operating fluid pressure may be controlled based on a variety of parameters including, e.g., measured fluid level height in the operating fluid reservoir and air pressure in the operating fluid reservoir. Additional parameters may include, but are not limited to, operating fluid flowrate.

The operating fluid pressure feedback control subsystem may include a controller configured to maintain a controlled variable, e.g., fluid pressure, at a desired set point. The controller may be any suitable control system. In some instances, the controller includes a closed-loop control system, e.g., a feedback controller. The system may include any suitable sensors for sensing one or more parameters for feedback signals. In some instances, the controller is configured to receive a signal representing measured operating fluid reservoir air pressure. In some instances, the controller is configured to receive a signal representing measured liquid level height in the operating fluid reservoir. In some instances, the controller is configured to receive a signal representing measured operating fluid reservoir air pressure and a signal representing measured liquid level height in the operating fluid reservoir. In some instances, the controller is configured to determine whether operating fluid pressure has deviated from a set point based on the received signal representing measured operating fluid reservoir air pressure and/or signal representing measured liquid level height in the operating fluid reservoir. In some instances, the controller is configured to send an operating fluid pressure control signal to the operating fluid reservoir air pressure regulator, e.g., to modulate operating fluid reservoir air pressure (and thereby modulate the operating fluid pressure and operating fluid flow rate) where the operating fluid pressure has deviated from a set point. The operating fluid pressure control signal may cause the operating fluid reservoir air pressure regulator to modulate air pressure in the operating fluid reservoir such that the operating fluid pressure matches a desired setpoint. In some instances, the controller is configured to send an operating fluid pressure control signal to a controller of the sample fluid pressure feedback control system. Any suitable feedback control mechanism may be used. Feedback controllers of interest may use control parameters such as, e.g., a proportional gain, an integral term, and/or a derivative term. The control parameters may be applied to an error signal (e.g., a difference between a setpoint and a feedback signal) to calculate an input that is provided to the controlled system or process. In certain embodiments, the controller is a proportional integral derivative (PID) controller.

In some instances, the operating fluid pressure feedback control subsystem includes an operating fluid reservoir air pressure regulator configured to control air pressure in the operating fluid reservoir. The operating fluid reservoir air pressure regulator may be configured to receive an operating fluid pressure control signal from a controller and modulate the air pressure in the operating fluid reservoir (and thereby modulate the fluid pressure). The operating fluid reservoir air pressure regulator may modulate the air pressure in the operating fluid reservoir such that the operating fluid pressure matches a desired setpoint. The operating fluid reservoir air pressure regulator may be gaseously coupled to a pressurized air source. In some instances, the operating fluid reservoir air pressure regulator is gaseously coupled to an operating fluid reservoir. In some instances, an inlet of the operating fluid reservoir air pressure regulator is gaseously coupled to the pressurized air source. In some instances, an outlet of the operating fluid reservoir air pressure regulator is gaseously coupled to the operating fluid reservoir. Any suitable air pressure regulator may be used. Pressure regulators of interest may include, e.g., devices that control (e.g., modulate) a supply (or inlet) pressure to a desired outlet pressure and work to maintain this outlet pressure despite fluctuations in the inlet pressure. In some instances, the operating fluid reservoir air pressure regulator is an electro-pneumatic pressure regulator.

In some instances, the operating fluid pressure feedback control subsystem includes a fluid level measurement device configured to measure the fluid level height in the operating fluid reservoir. The fluid level measurement device may be operatively coupled to the operating fluid reservoir. The output signal of the fluid level measurement device (e.g., representing the measured fluid level) may be sent to a controller of the operating fluid pressure feedback control subsystem according to the embodiments described herein. In some instances, the fluid level measurement device is a point level measurement sensor configured to mark a single discrete liquid height. In some instances, the fluid level measurement device is a continuous level sensor configured to measure fluid level within a range. Suitable fluid level measurement devices include, but are not limited to, glass level gauges, float switches, ultrasonic sensors, capacitance level sensors, hydrostatic devices (e.g., bubblers, displacers, differential pressure transmitters), strain gauges, magnetic level gauges, magnetostrictive level transmitters, laser level transmitters, radar level sensors, guided radar sensors, tuning forks, etc.

The fluid management systems of the present disclosure may further include a sample fluid pressure feedback control subsystem configured to control or regulate sample fluid pressure in the system, e.g., in a sample fluid source. The sample fluid pressure may be controlled via regulated air pressure in the sample fluid source. Pressurized sample fluid may be supplied from the sample fluid source directly to the flow cell. The fluid pressure in the sample fluid source may be controlled based on a variety of parameters including, e.g., measured air pressure in the sample fluid source and an operating fluid pressure control signal. Additional parameters may include, but are not limited to, sample liquid level height and sample fluid flow rate.

The sample fluid pressure feedback control subsystem may include a controller configured to maintain a controlled variable, e.g., fluid pressure, at a desired set point. The controller may be any suitable control system. In some instances, the controller includes a closed-loop control system, e.g., a feedback controller. The system may include any suitable sensors for sensing one or more parameters for feedback signals. The sample fluid pressure setpoint may be sheath fluid pressure + desired flow. In such instances, the sample fluid pressure will always be greater than the operating fluid (e.g., sheath) pressure for positive flow through the system. This allows for dynamic adjustment of the operating fluid without changing the effective pressure drop of the sample fluid. The systems described herein may provide for control of sample pressure as a differential above operating fluid (e.g., sheath) pressure. This allows for changing operating fluid pressure while keeping sample flowrate constant (P_sample (sample fluid pressure) = P_sheath (sheath fluid pressure) + P_diff (differential pressure). In certain embodiments, the controller is configured to receive a signal representing measured sample fluid source air pressure. In certain embodiments, the controller is configured to receive an operating fluid pressure control signal, e.g., from the controller of the operating fluid pressure feedback control subsystem. In certain embodiments, the controller is configured to receive a signal representing measured sample fluid source air pressure and the operating fluid pressure control signal. In some instances, the controller is configured to determine whether sample fluid pressure has deviated from a set point based on the received signal representing measured sample fluid source air pressure and/or the operating fluid pressure control signal. The controller may be configured to send a sample fluid pressure control signal to the sample fluid source air pressure regulator, e.g., to modulate sample fluid source air pressure (and thereby modulate sample fluid pressure and sample fluid flow rate) where the sample fluid pressure has deviated from a set point. The sample fluid pressure control signal may cause the sample fluid source air pressure regulator to modulate air pressure in the sample fluid source such that the sample fluid pressure matches a desired setpoint. Any suitable feedback control mechanism may be used. Feedback controllers of interest may use control parameters such as, e.g., a proportional gain, an integral term, and/or a derivative term. The control parameters may be applied to an error signal (e.g., a difference between a setpoint and a feedback signal) to calculate an input that is provided to the controlled system or process. In certain embodiments, the controller is a PID controller.

In some instances, the sample fluid pressure feedback control subsystem includes a sample fluid source air pressure regulator configured to control air pressure in the sample fluid source. The sample fluid source air pressure regulator may be configured to receive a sample fluid pressure control signal from a controller and modulate the air pressure in the sample fluid source (and thereby modulate the fluid pressure). The sample fluid source air pressure regulator may modulate the air pressure in the sample fluid source such that the sample fluid pressure matches a desired setpoint. The sample fluid source air pressure regulator may be gaseously coupled to a pressurized air source. In some instances, the sample fluid source air pressure regulator is gaseously coupled to a sample fluid source. In some instances, an inlet of the sample fluid source air pressure regulator is gaseously coupled to a pressurized air source. In some instances, an outlet of the sample fluid source air pressure regulator is gaseously coupled to a sample fluid source. Any suitable air pressure regulator may be used. Pressure regulators of interest may include, e.g., devices that control (e.g., modulate) a supply (or inlet) pressure to a desired outlet pressure and work to maintain this outlet pressure despite fluctuations in the inlet pressure. In some instances, the sample fluid source air pressure regulator is an electro-pneumatic pressure regulator.

In certain embodiments, the flow type particle analyzer includes a sample fluid source. The sample fluid source may be any suitable reservoir or container (e.g., having rigid or flexible walls) for holding a sample fluid. In some instances, the sample input line of the fluid management system is fluidically coupled to a sample fluid source. The sample fluid container may have a volume ranging from 1 mL to 100 mL; for example, the volume of the container may range from 1 mL to 90 mL, from 1 mL to 80 mL, from 1 mL to 70 mL, from 1 mL to 60 mL, from 1 mL to 50 mL, from 1 mL to 40 mL, from 1 mL to 30 mL, from 1 mL to 20 mL, or from 1 mL to 10 mL.

The sample fluid source may include a sample fluid, and pressurized sample fluid may flow from the sample fluid source to the flow cell. Pressure may be applied to the sample fluid with a pressurized air source and a sample fluid source air pressure regulator gaseously coupled to the sample fluid source. The air pressure in the sample fluid source may be regulated by the sample fluid pressure feedback control subsystem to control sample fluid pressure and flowrate.

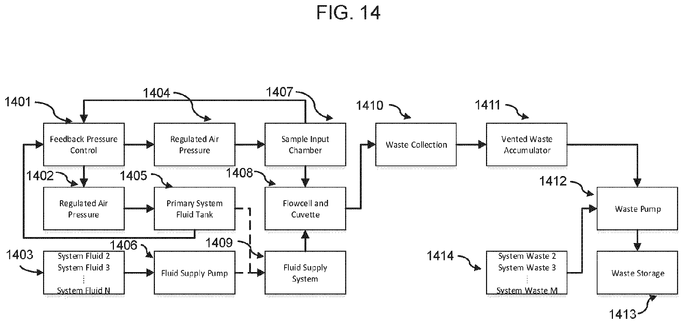

**FIG. 14** provides a flow chart of sub-functions within the primary functions of a fluid management system configured to analyze a sample, according to certain embodiments. The architecture is pump-based for the management of secondary system fluids and all waste fluids. A fluid supply pump 1406 manages primary flushing and secondary system fluids 1403. A waste pump 1412 manages waste fluids from the vented waste accumulator 1411 and system waste 1414.

The fluid architecture has positive-pressure-based sheath and sample delivery, where a positive pressure source is used to control the ratio of sheath/sample liquid flow. The operating fluid (sheath) is controlled via regulated air pressure 1402 and sample fluid pressure is controlled via regulated air pressure 1404. Feedback control 1401 of the air pressure is closed-loop via inputs from the operating fluid (sheath) chamber 1405 and sample chamber 1407. Examples of feedback parameters are measurement of the chamber air pressure, liquid-level height for pressure-head compensation, etc. Additionally, the operating fluid (sheath) pressure control signal is used as feedback for the sample pressure control. The sample pressure setpoint is always sheath pressure + desired flow. This is because the sample pressure will always be greater than the operating fluid (sheath) pressure for positive flow through the system. This allows for dynamic adjustment of the operating fluid without changing the effective pressure drop of the sample fluid.

The pressurized operating fluid (sheath) travels through a fluid supply system 1409 and to the flow cell 1408, and the pressurized sample is supplied directly to the flow cell 1408. Fluids in an arbitrary number of fluid supply reservoirs (e.g., for cleaning fluids) 1403 can also be delivered via a fluid supply pump 1406 to the fluid supply system 1409 in place of the operating fluid (sheath) 1405. The dotted lines indicate that (a) operating fluid may be supplied to the flow cell or alternatively, (b) any number of secondary system fluids are supplied to the flow cell. This allows for 100% swept cleaning of the fluidics system. As the operating and sample fluids travel through the flow cell and cuvette 1408, the sample is interrogated.

After the operating fluid and sample fluid (or secondary fluids during cleaning) flow through the flow cell, both fluids can be considered "analyzed waste fluid" 1410 which is collected in a vented waste accumulator at atmospheric pressure 1411. All waste from the system (analyzed waste 1410 plus any secondary waste sources such as from cleaning operations 1414) is combined and drawn by a single vacuum waste source, such as a waste pump 1412. The combined waste is sent for waste storage 1413.

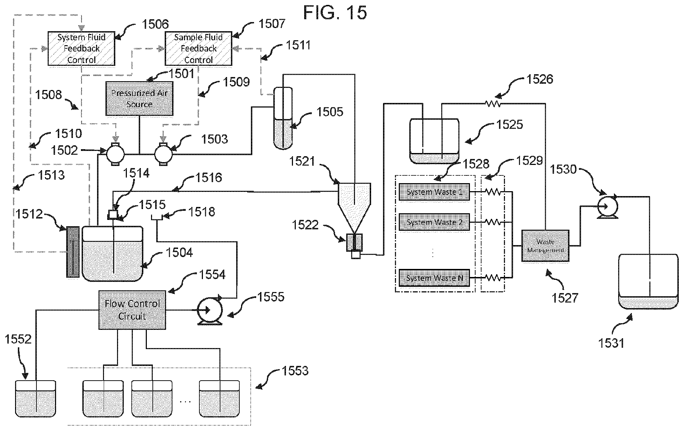

**FIG. 15** shows a schematic of a fluid management system, according to one embodiment. A pressurized air source 1501 is used to supply air pressure to electro-pneumatic pressure regulators. The pressure regulator 1502 controls air pressure in the operating fluid reservoir 1504, and sample fluid regulator 1503 controls pressure in the sample chamber 1505. A feedback control mechanism 1506, such as a PID controller, is used to send a control signal 1508 to the pressure regulator 1502. A similar feedback control mechanism 1507 is used to send a control signal 1509 to the sample regulator 1503. Feedback of the operating fluid pressure comes from the measured air pressure in the operating fluid reservoir 1510 as well as the measured liquid height in the operating fluid reservoir 1513 using a liquid level measurement device 1512. Feedback of the sample fluid pressure comes from the measured air pressure in the sample chamber 1511 as well as the operating fluid control signal 1508. The setpoint of the sample fluid is always controlled as a delta above the operating fluid pressure such that pressure drop across the sample line is constant even when operating fluid pressure is varied. The operating fluid reservoir 1504 has a quick-disconnect connection 1515 which connects to tubing 1516 and mating connector 1514. Any arbitrary amount of secondary fluids are stored in set of secondary fluid reservoirs 1553. In addition, primary flushing fluid reservoir 1552 includes a primary flushing fluid. Flow control circuit 1554 selectively permits fluid from primary flushing fluid reservoir 1552 and secondary fluid reservoirs 1553 as described above.

If the primary flushing or secondary fluids are needed, such as for cleaning the instrument, the connector 1514 and tubing 1516 can be disconnected from the operating fluid supply tank and connected to another mating connector 1518 which is connected to the fluid supply pump 1555. Other fluid supply systems of the invention described herein may alternatively be employed. If sample is being analyzed, operating fluid and sample fluid meet in the flowcell 1521 and the sample is hydrodynamically focused into the cuvette 1522, where the sample interrogation happens. After analysis, the combined operating fluid and sample can be considered analyzer waste. This waste flows to a vented waste accumulator 1525 at atmospheric pressure. This accumulator 1525 is at atmospheric pressure to maintain a constant pressure drop across the flowcell and cuvette. A single waste pump 1530 supplies vacuum to aspirate all sources of waste in the system. Analyzer waste in the vented waste accumulator 1525 is drawn out through a tube with a known fluid resistance 1526 to the waste management system 1527. This resistor can be a section of tubing with known length and internal diameter, an orifice, etc. Any arbitrary number of additional sources of system waste 1528, such as that used to clean other parts of the instrument, are also connected via sections of tubing with known fluid resistance 1529 to the waste management system 1527. The waste management system can be any system of fluid management which combined multiple sources of waste in parallel to a single output. The single waste output of the waste management system 1527 is used to pull all waste sources via the waste pump 1530 and all of the system waste is stored in the waste tank 1531.

In certain embodiments, the fluid management systems include a particle sorter fluid management system that belongs to a particle sorter configured to analyze and sort particles in a sample fluid. Following the analysis of particles in the sample fluid, the analyzed sample fluid may be flowed from the output of the cuvette to a sort block coupled to the output of the cuvette. The flow stream may exit a nozzle in the sort block with a nozzle diameter. To produce droplets, the nozzle may be rapidly vibrated by an acoustic device, such as a piezoelectric element. To sort particles in the sample, a drop charging mechanism may charge droplets of the flow stream containing a particle type to be sorted with an electrical charge, e.g., at the break-off point of the flow stream. Droplets may be passed through an electrostatic field and deflected based on polarity and magnitude of charge on the droplet into one or more collection containers. Uncharged droplets are not deflected by the electrostatic field. Droplets, whether they are charged or are uncharged may be collected in one or more sample collection vessels or collection subsystems that are appropriately directed, e.g., positioned, to collect the one or more flow streams generated by the deflection plates.

In such embodiments, the fluid management system may be configured to analyze sample fluid in the cuvette in the same manner as done in a particle analyzer, as described in detail above, where, e.g., the system analyzes the detected light to measure physical and fluorescent properties of a particle. The flow cytometer can further sort the particles based on these measured properties. The fluid management system for a particle sorter may be identical to the fluid management system for a particle analyzer except for the particle sorter fluid management system may include a sort block, sorter waste fluid collection subsystem (instead of the analyzer waste fluid collection subsystem), and a sample collection system including one or more sample collection containers. The sort block may be configured to be coupled, e.g., detachably coupled, to the output of the cuvette. The waste fluid from sorting may be collected by the sorter waste fluid collection subsystem positioned in droplet receiving relationship to the output of the sort block. The waste fluid collected by the sorter waste fluid collection subsystem may be transported through a waste management subsystem to a waste container by a fluid movement device. The waste fluid collected by the sorter waste fluid collection subsystem may be drawn through a waste management subsystem to a waste container by a vacuum produced by the fluid movement device. Waste fluid from a sorting operation may include, e.g., particles not sorted into a sample collection container and analyzed fluids (e.g., sample fluid, operating fluid).

As summarized above, in some instances, the fluid management system includes a sorter waste fluid collection subsystem configured to fluidically couple an output of a sort block coupled to the output of the cuvette to a waste management subsystem. The sorter waste fluid collection subsystem may be configured to receive and collect waste fluid from a sorting operation performed by the flow type particle analyzer. The sorter waste fluid collection subsystem may be configured to receive and collect a waste fluid from an output of a sort block, e.g., waste fluid that has been flowed through the cuvette and exited the sort block coupled to the cuvette. The sorter waste fluid collection subsystem may be positioned in droplet receiving relationship with the sort block. The sorter waste fluid collection subsystem may include any suitable containers and fluidic lines suitable for collecting a waste fluid from sorting a sample.

In some instances, the sorter waste fluid collection subsystem includes a waste aspirator for receiving waste from an output of the sort block, the waste aspirator being fluidically coupled to the waste management subsystem. The waste aspirator may include any suitable components, e.g., tubes, containers, fluidic lines, etc., for receiving and transporting waste fluid from a sort block. The waste aspirator may convey waste received from the sort block to the waste management subsystem. In some instances, waste fluid in the waste aspirator is drawn to the waste management subsystem by vacuum created by a fluid movement device fluidically coupled to the waste management subsystem. The waste aspirator may be configured to receive waste from the output of the sort block. In some instances, the waste aspirator is positioned in droplet receiving relationship with an output of a sort block coupled to the cuvette. The waste aspirator may be fluidically coupled to the waste management subsystem with a known fluid resistance. In some instances, a fluidic line coupling the waste aspirator to the waste management subsystem includes a resistor. The resistor may provide a known fluid resistance in the fluidic line coupling the waste aspirator to the waste management subsystem. The resistor may be any resistor described herein.

In some instances, the fluid management system includes a sort block configured to detachably couple to the output of the cuvette (e.g., a removable sort block). By "detachably couple" is meant that the sort block may be coupled to, e.g., attached to, and then subsequently at some point be uncoupled, e.g., detached, from the cuvette. In some instances, the sort block is configured to be manually coupled to the output of the cuvette. In such embodiments, the sort block may have a connector or fitting component that allows the sort block to be coupled to the output of the cuvette. In some instances, the sort block is configured to detachably couple to the output of the cuvette in the same manner as the analyzer waste fluid subsystem connector. For example, the sort block and the analyzer waste fluid collection subsystem connector may both have identical manual connectors configured to detachably couple to the output of the cuvette.

The sort block may include any suitable components that enable sorting of particles in a sample such as, e.g., a sort nozzle and one or more deflection plates. To sort cells by an electrostatic method, the desired cell must be contained within an electrically charged droplet. To produce droplets, a sort block, e.g., sort nozzle, may be rapidly vibrated by an acoustic device, such as a piezoelectric element. The volume of a droplet may be estimated by the hydrodynamic properties of the flow stream and the nozzle dimensions. To charge the droplet, the sort block may include a charging element whose electrical potential can be rapidly changed. Because the cell stream may exit a sort nozzle in a substantially downward vertical direction, the droplets may also propagate in that direction after they are formed. Droplets, whether they are charged or are uncharged, may be collected in a sample collection vessel or by a waste fluid collection subsystem that is appropriately directed, e.g., positioned, to collect the one or more flow streams generated by deflection plates. Methods and devices for electrostatic cell sorting are described in, e.g., U.S. Patent No. 9,952,076 and U.S. Patent No. 9,404,846.

The sort block may include any suitable sort nozzle configured to generate stream-in-air droplets for sorting. Combined operating fluid and sample fluid may flow from the cuvette to the sort nozzle and exit in a flow stream through an orifice of the sort nozzle. The nozzle orifice may have any diameter for example, 50 µm, 70 µm, 100 µm, or any other suitable diameter. The nozzle diameter may affect the properties of a flow stream, such as the stream dimensions, droplet break-off point and drop volume. The flow stream may be continuous flow of fluid or a series of droplets depending on the action of a droplet generator.

The sort block may include any suitable droplet deflectors configured to deflect particles in a flow stream flowing therebetween. A flow stream may be a series of droplets that are partially deflected by a pair of deflection plates and become a plurality of streams. Charged droplets may be deflected and directed by the potentials applied to the deflection plates away from their original path, e.g., toward a collection vessel. Droplets which have been neither positively nor negatively charged may not be deflected by the potentials applied to deflection plates, and therefore continue along their original path. In some instances, charged droplets are collected by the waste fluid collection subsystem. In some instances, uncharged droplets are collected by the waste fluid collection subsystem.

The sort block may deliver sorted particles to a sample collection system or a sorter waste fluid collection subsystem. The sort block may deliver a sorted sample, e.g., sorted particles of interest, to a sample collection container. The collection container may be in droplet receiving relationship with the sort block; for example, the collection container may receive a flow cytometrically sorted cellular product, e.g., in the form of droplets, from the sort block. In some cases, the sort block delivers waste fluid to a waste aspirator of the sorter waste fluid collection subsystem. The waste aspirator may be in droplet receiving relationship with the sort block; for example, the waste aspirator may receive waste fluid, e.g., in the form of droplets, from the sort block.

In some instances, the fluid management system includes a sample collection system including a sample collection container for receiving a sorted sample from an output of the sort block. The sample collection container may be any suitable container (e.g., having rigid or flexible walls) for receiving sorted particles. The sample collection system may be configured to collect sorted particles in a sterile manner. In some instances, the sample collection system includes any of the collection systems described, e.g., in U.S. Publication No. 2019/0331657.

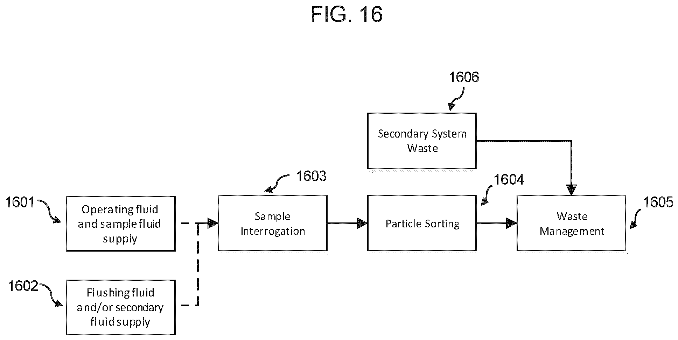

**FIG. 16** provides a flow chart of the primary functions of a fluid management system configured to analyze and sort a sample, according to certain embodiments. The primary functions are: 1601 supplying an operating fluid (e.g., sheath) and sample fluid in a controlled ratio to a flow cell; 1602 supplying any number of primary flushing and/or secondary fluids (e.g., for cleaning); 1603 hydrodynamic focusing of the sample using the operating fluid for sample interrogation through a cuvette; collecting unsorted waste fluid; and 1605 managing and storing all system waste (waste from particle sorting 1604 and secondary system waste 1606). The dotted lines indicate that (a) operating fluid and sample fluid may be supplied to the flow cell or alternatively, (b) any number of primary flushing or secondary system fluids are supplied to the flow cell.

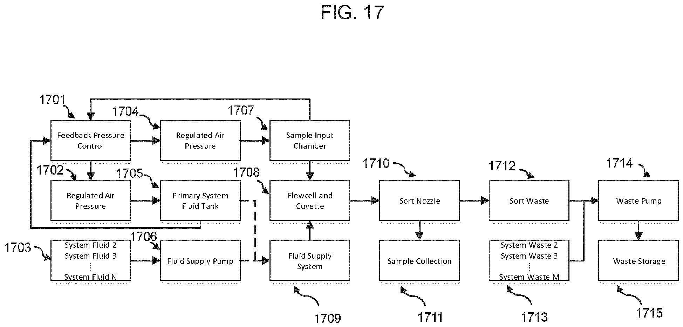

**FIG. 17** provides a flow chart of sub-functions within the primary functions of a fluid management system configured to analyze and sort a sample, according to certain embodiments. The architecture is pump-based for the management of secondary system fluids and all waste fluids. A fluid supply pump 1706 manages primary flushing and secondary system fluids 1703. A waste pump 1714 manages all waste fluids from particle sorting 1712 and system waste 1713.

The fluid architecture has positive-pressure-based sheath and sample delivery, where a positive pressure source is used to control the ratio of sheath/sample liquid flow. The operating fluid (sheath) is controlled via regulated air pressure 1702 and sample fluid pressure is controlled via regulated air pressure 1704. Feedback control 1701 of the air pressure is closed-loop via inputs from the operating fluid (sheath) chamber 1705 and sample chamber 1707. Examples of feedback parameters are measurement of the chamber air pressure, liquid-level height for pressure-head compensation, etc. Additionally, the operating fluid (sheath) pressure control signal is used as feedback for the sample pressure control. The sample pressure setpoint is always sheath pressure + desired flow. This is because the sample pressure will always be greater than the operating fluid (sheath) pressure for positive flow through the system. This allows for dynamic adjustment of the operating fluid without changing the effective pressure drop of the sample fluid.

The pressurized operating fluid (sheath) travels through a fluid supply system 1709 and to the flow cell 1708, and the pressurized sample is supplied directly to the flow cell 1708. Fluids in an arbitrary number of primary flushing fluid and secondary fluid reservoirs (e.g., for cleaning fluids) 1703 can also be delivered via a fluid supply pump 1706 to the fluid supply system 1709 in place of the operating fluid (sheath) 1705. The dotted lines indicate that (a) operating fluid may be supplied to the flow cell or alternatively, (b) any number of primary flushing or secondary system fluids are supplied to the flow cell. This allows for 100% swept cleaning of the fluidics system. As the primary and sample fluids travel through the flow cell and cuvette 1708, the sample is interrogated.

After operating and sample fluid flows through the flow cell and cuvette for analysis, the fluid then travels to a sorting nozzle 1710 which generates stream-in-air droplets. These droplets can be sorted for collection 1711 or waste 1712 via the instrument sorting mechanism. All waste from the system (sorted waste 1712 plus any secondary waste sources such as from cleaning operations 1713) is combined and drawn by a single vacuum waste source, such as a waste pump 1714. The combined waste is sent for waste storage 1715.

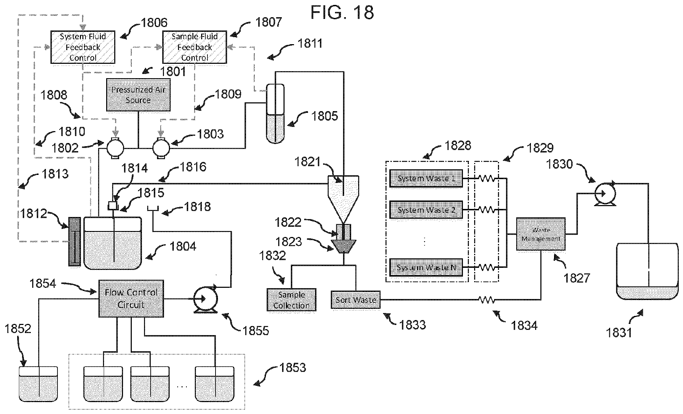

**FIG. 18** shows a schematic of a sorter architecture of a flow cytometer, according to one embodiment. A pressurized air source 1801 is used to supply air pressure to electro-pneumatic pressure regulators. The pressure regulator 1802 controls air pressure in the operating fluid reservoir 1804, and the sample fluid regulator 1803 controls pressure in the sample chamber 1805. A feedback control mechanism 1806, such as a PID controller, is used to send a control signal 1808 to the pressure regulator 1802. A similar feedback control mechanism 1807 is used to send a control signal 1809 to the sample regulator 1803. Feedback of the operating fluid pressure comes from the measured air pressure in the operating fluid reservoir 1810 as well as the measured liquid height in the operating fluid reservoir 1813 using a liquid level measurement device 1812. Feedback of the sample fluid pressure comes from the measured air pressure in the sample chamber 1811 as well as the operating fluid control signal 1808. The setpoint of the sample fluid is always controlled as a delta above the operating fluid pressure such that pressure drop across the sample line is constant even when operating fluid pressure is varied. The operating fluid reservoir 1804 has a quick-disconnect connection 1815 which connects to mating connector 1814.

Also included is a fluid supply system of the invention. Any arbitrary amount of secondary fluids are stored in secondary fluid reservoirs 1853. In addition, a primary flushing fluid reservoir 1852 is included. If the primary flushing fluid or secondary fluids are needed, such as for cleaning the instrument, the fluid supply connector 1814 and tubing 1816 can be disconnected from the operating fluid supply tank and connector to another mating connector 1818 which is connected to the fluid supply pump 1855. Other fluid supply systems of the invention described herein may alternatively be employed. This pump can then supply fluid depending on the setting of flow control circuit 1854. Fluids are directed to the flowcell 1821. If sample is being analyzed, operating fluid and sample fluid meet in the flowcell 1821 and the sample is hydrodynamically focused into the cuvette 1822, where the sample interrogation happens. After analysis, the operating fluid and sample travel through a sort nozzle 1823, which creates stream-in-air droplets for sorting. Sorted sample is collected in the sample collection 1832, while unsorted waste is collected in a sorted waste aspirator 1833. A single waste pump 1830 supplies vacuum to aspirate all sources of waste in the system. Sorted waste in the sorted waste aspirator 1833 is drawn out through a tube with a known fluid resistor 1834 to the waste management system 1827. This resistor can be a section of tubing with known length and internal diameter, an orifice, etc. Any arbitrary number of additional sources of system waste 1828, such as that used to clean other parts of the instrument, are also connected via sections of tubing with known fluid resistance 1829 to the waste management system 1827. The waste management system can be any system of fluid management which combined multiple sources of waste in parallel to a single output. The single waste output of the waste management system 1827 is used to pull all waste sources via the waste pump 1830 and all of the system waste is stored in the waste tank 1831.

In certain embodiments, the fluid management systems include a hybrid system. The hybrid system may be configured to (a) analyze particles in a sample fluid (e.g., operate in analyzer mode), according to any of the embodiments described herein, or alternatively, (b) analyze and sort particles in a sample fluid (e.g. operate in sorter mode), according to any of the embodiments described herein. A hybrid system includes an analyzer waste fluid collection subsystem configured to fluidically couple the output of the cuvette to a waste management subsystem and a sorter waste fluid collection subsystem configured to fluidically couple an output of a sort block coupled to the output of the cuvette to a waste management subsystem. The fluid management system may be configured such that in some instances (a) the analyzer waste fluid collection subsystem fluidically couples the output of the cuvette to the waste management subsystem or alternatively in some instances, (b) the sorter waste fluid collection subsystem fluidically couples an output of a sort block coupled to the output of the cuvette to the waste management subsystem. The fluid management system may be configured to enable a user to select whether the analyzer waste fluid collection subsystem fluidically couples the output of the cuvette to the waste management subsystem or the sorter waste fluid collection subsystem fluidically couples an output of a sort block coupled to the output of the cuvette to the waste management subsystem. The user may base the selection on whether it is desired that the flow type particle analyzer (a) analyze a sample or (b) analyze and sort a sample. For example, to enable analyzer mode, the user may manually couple an analyzer waste fluid collection subsystem connector to the output of the cuvette where the connector fluidically couples the cuvette to the analyzer waste fluid collection subsystem. In analyzer mode, a sort block may not be coupled (or may be detached from) the output of the cuvette. To enable sorter mode, the user may manually couple a sort block to the output of the cuvette and position the sorter waste fluid collection subsystem in droplet receiving relationship to an output of the sort block. In some instances, to switch from analyzer to sorter mode, the analyzer waste fluid collection subsystem, e.g., an analyzer waste fluid collection subsystem connector, is uncoupled or detached from the cuvette before a sort block is coupled to the cuvette. The hybrid fluid management system may include any of the elements of the particle analyzer fluid management systems and particle sorter fluid management systems as described above.

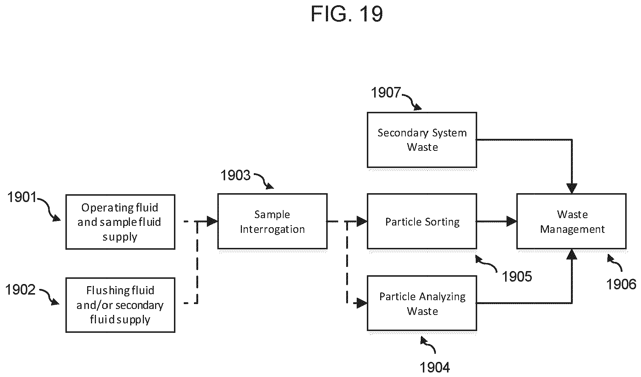

**FIG. 19** provides a flow chart of the primary functions of a fluid management system configured to alternatively (a) analyze a sample or (b) analyze and sort a sample, according to certain embodiments. The primary functions are: 1901 supplying an operating fluid (e.g., sheath) and sample fluid in a controlled ratio to a flow cell; 1902 supplying any number of secondary system fluids (e.g., for cleaning); 1903 hydrodynamic focusing of the sample using the operating fluid for sample interrogation through a cuvette; 1904 collecting the analyzed sample as waste if the system is configured as an analyzer; 1905 collecting unsorted waste fluid if the system is configured as a sorter; and 1906 managing and storing all system waste (waste from particle analyzing 1904, particle sorting 1905, and system waste 1907. The dotted lines before sample interrogation indicate that (a) operating fluid and sample fluid may be supplied to the flow cell or alternatively, (b) any number of secondary system fluids are supplied to the flow cell. The dotted lines after sample interrogation indicate that (a) an analyzed sample may be sorted or alternatively, (b) waste from analyzing the sample is collected with no sorting performed.

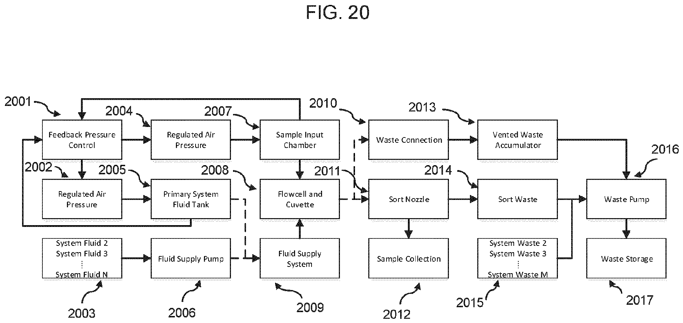

**FIG. 20** provides a flow chart of sub-functions within the primary functions of a fluid management system configured to alternatively (a) analyze a sample or (b) analyze and sort a sample, according to certain embodiments. The architecture is pump-based for the management of secondary system fluids and all waste fluids. A fluid supply pump 2006 manages primary flushing and secondary system fluids 2003. A waste pump 2016 manages system waste 2015 in addition to waste fluids from the vented waste accumulator 2013 and particle sorting 2014.

The fluid architecture has positive-pressure-based sheath and sample delivery, where a positive pressure source is used to control the ratio of sheath/sample liquid flow. The operating fluid (sheath) is controlled via regulated air pressure 2002 and sample fluid pressure is controlled via regulated air pressure 2004. Feedback control 2001 of the air pressure is closed-loop via inputs from the operating fluid (sheath) chamber 2005 and sample chamber 2007. Examples of feedback parameters are measurement of the chamber air pressure, liquid-level height for pressure-head compensation, etc. Additionally, the operating fluid (sheath) pressure control signal is used as feedback for the sample pressure control. The sample pressure setpoint is always sheath pressure + desired flow. This is because the sample pressure will always be greater than the operating fluid (sheath) pressure for positive flow through the system. This allows for dynamic adjustment of the operating fluid without changing the effective pressure drop of the sample fluid.

The pressurized operating fluid (sheath) travels through a fluid supply system 2009 and to the flow cell 2008, and the pressurized sample is supplied directly to the flow cell 2008. Fluids in an arbitrary number of fluid supply tanks (e.g., for cleaning fluids) 2003 can also be delivered via a fluid supply pump 2006 to the fluid supply system 2009 in place of the operating fluid (sheath) 2005.The dotted lines leading to the fluid supply system indicate that (a) operating fluid may be supplied to the flow cell or alternatively, (b) any number of secondary system fluids are supplied to the flow cell. This allows for 100% swept cleaning of the fluidics system. As the operating and sample fluids travel through the flow cell and cuvette 2008, the sample is interrogated.

The hybrid fluidics architecture contains both the vented waste accumulator 2013 from the analyzer system as well as the sort nozzle 2011, sample collection 2012, and sort waste collection 2014 from the sorter architecture. The user can select which mode of operation to perform: analyzing sample only which does not require the generation of a stream or analyzing and sorting as is in the sorter. If the system is configured as an analyzer, a waste connection 2010, e.g., a connector or fitting, may be coupled to the cuvette where the waste connection fluidically couples the vented waste accumulator to the cuvette. If the system is configured as a sorter, a sort nozzle 2011 may be coupled to the cuvette. The dotted lines after sample interrogation in the flow cell and cuvette indicate that (a) an analyzed sample may be sorted (2011) or alternatively, (b) waste from analyzing the sample is collected with no sorting performed (2010). All waste from the system (analyzed waste (2013) or sorted waste (2014) plus any secondary waste sources such as from cleaning operations (2015)) is combined and drawn by a single vacuum waste source, such as a waste pump (2016). The combined waste is sent for waste storage 2017.

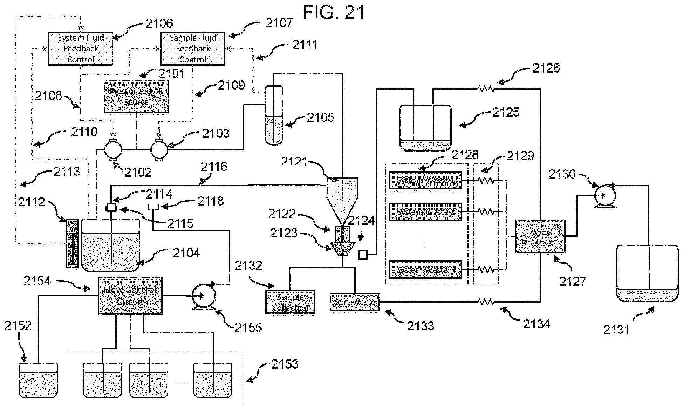

**FIG. 21** shows a hybrid architecture including a combination of both analyzer and sorter architectures with components to allow for switching between the functions, according to one embodiment. A pressurized air source 2101 is used to supply air pressure to electro-pneumatic pressure regulators. The pressure regulator 2102 controls air pressure in the operating fluid reservoir 2104, and the sample fluid regulator 2103 controls pressure in the sample chamber 2105. A feedback control mechanism 2106, such as a PID controller, is used to send a control signal 2108 to the pressure regulator 2102. A similar feedback control mechanism 2107 is used to send a control signal 2109 to the sample regulator 2103. Feedback of the operating fluid pressure comes from the measured air pressure in the operating fluid reservoir 2110 as well as the measured liquid height in the operating fluid reservoir 2113 using a liquid level measurement device 2112. Feedback of the sample fluid pressure comes from the measured air pressure in the sample chamber 2111 as well as the operating fluid control signal 2108. The setpoint of the sample fluid is always controlled as a delta above the operating fluid pressure such that pressure drop across the sample line is constant even when operating fluid pressure is varied. The operating fluid reservoir 2104 has a quick-disconnect connection 2115 which connects to mating connector 2114.

The system additionally includes a fluid supply system of the invention. Any arbitrary amount of secondary fluids are stored in secondary fluid reservoirs 2153. Also included is primary flushing fluid reservoir 2152. If the primary flushing or secondary fluids are needed, such as for cleaning the instrument, the fluid supply connector 2114 and tubing 2116 can be disconnected from the operating fluid reservoir and connector to another mating connector 2118 which is connected to the fluid supply pump 2155. Other fluid supply systems of the invention described herein may alternatively be employed. This pump can then supply a primary flushing fluid or secondary fluid based on the setting of flow control circuit 2154. Operating or secondary fluids are directed by the to the flowcell 2121. If sample is being analyzed, operating fluid and sample fluid meet in the flowcell 2121 and the sample is hydrodynamically focused into the cuvette 2122, where the sample interrogation happens. After analysis, the operating fluid and sample travel through a sort nozzle 2123, which creates stream-in-air droplets for sorting. Sorted sample is collected in the sample collection 2132, while unsorted waste is collected in a sorted waste aspirator 2133. If a user wishes to run the system in an analyzer-only mode, the sort nozzle 2123 is removed from cuvette, and in its place a connector 2124 which leads to a vented waste accumulator 2125 at atmospheric pressure is coupled to the cuvette. This accumulator 2125 is at atmospheric pressure to maintain a constant pressure drop across the flowcell and cuvette. A single waste pump 2130 supplies vacuum to aspirate all sources of waste in the system. Sorted waste in the sorted waste aspirator 2133 is drawn out through a tube with a known fluid resistor 2134 to the waste management system 2127. Analyzer waste in the vented waste accumulator 2125 is drawn out through a tube with a known fluid resistor 2126 to the waste management system 2127. These resistors can be a section of tubing with known length and internal diameter, an orifice, etc. Any arbitrary number of additional sources of system waste 2128, such as that used to clean other parts of the instrument, are also connected via sections of tubing with known fluid resistance 2129 to the waste management system 2127. The waste management system can be any system of fluid management which combined multiple sources of waste in parallel to a single output. The single waste output of the waste management system 2127 is used to pull all waste sources via the waste pump 2130 and all of the system waste is stored in the waste tank 2131.

### FLOW CYTOMETERS

Aspects of the invention additionally include flow cytometers including a fluid supply system of the invention. Flow cytometers of interest include, e.g., a flow cell configured to transport particles in a flow stream, a light source configured to irradiate the flow cell at an interrogation point, and a fluid supply system of the invention. As discussed herein, a "flow cell" is described in its conventional sense to refer to a component, such as a cuvette, containing a flow channel having a liquid flow stream for transporting particles in a sheath fluid. Cuvettes of interest include containers having a passage running therethrough. The flow stream may include a liquid sample injected from a sample tube. Flow cells of interest include a light-accessible flow channel. In some instances, the flow cell includes transparent material (e.g., quartz) that permits the passage of light therethrough. In some embodiments, the flow cell is a stream-in-air flow cell in which light interrogation of the particles occurs outside of the flow cell (i.e., in free space).

In some cases, the flow stream is configured for irradiation with light from a light source at an interrogation point. The flow stream for which the flow channel is configured may include a liquid sample injected from a sample tube. In certain embodiments, the flow stream may include a narrow, rapidly flowing stream of liquid that is arranged such that linearly segregated particles transported therein are separated from each other in a single-file manner. The "interrogation point" discussed herein refers to a region within the flow cell in which the particle is irradiated by light from the light source, e.g., for analysis. The size of the interrogation point may vary as desired. For example, where 0 µm represents the axis of light emitted by the light source, the interrogation point may range from -100 µm to 100 µm, such as -50 µm to 50 µm, such as -25 µm to 40 µm, and including -15 µm to 30 µm.

After particles are irradiated in the flow cell, particle-modulated light may be observed. By "particle-modulated light" it is meant light that is received from the particles in the flow stream following the irradiation of the particles with light from the light source. In some cases, the particle-modulated light is side-scattered light. As discussed herein, side-scattered light refers to light refracted and reflected from the surfaces and internal structures of the particle. In additional embodiments, the particle-modulated light includes forward-scattered light (i.e., light that travels through or around the particle in mostly a forward direction). In still other cases, the particle-modulated light includes fluorescent light (i.e., light emitted from a fluorochrome following irradiation with excitation wavelength light).

As discussed above, aspects of the invention also include a light source configured to irradiate particles passing through the flow cell at an interrogation point. Any convenient light source may be employed as the light source described herein. In some embodiments, the light source is a laser. In embodiments, the laser may be any convenient laser, such as a continuous wave laser. For example, the laser may be a diode laser, such as an ultraviolet diode laser, a visible diode laser and a near-infrared diode laser. In other embodiments, the laser may be a helium-neon (HeNe) laser. In some instances, the laser is a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCI) excimer laser or xenon-fluorine (XeF) excimer laser or a combination thereof. In other instances, the subject flow cytometers include a dye laser, such as a stilbene, coumarin or rhodamine laser. In yet other instances, lasers of interest include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. In still other instances, the subject flow cytometers include a solid-state laser, such as a ruby laser, an Nd:YAG laser, NdCrYAG laser, Er:YAG laser, Nd:YLF laser, Nd:YVO₄ laser, Nd:YCa₄O(BO₃)₃ laser, Nd:YCOB laser, titanium sapphire laser, thulim YAG laser, ytterbium YAG laser, ytterbium₂O₃ laser or cerium doped lasers and combinations thereof.

Laser light sources according to certain embodiments may also include one or more optical adjustment components. In certain embodiments, the optical adjustment component is located between the light source and the flow cell, and may include any device that is capable of changing the spatial width of irradiation or some other characteristic of irradiation from the light source, such as for example, irradiation direction, wavelength, beam width, beam intensity and focal spot. Optical adjustment protocols may include any convenient device which adjusts one or more characteristics of the light source, including but not limited to lenses, mirrors, filters, fiber optics, wavelength separators, pinholes, slits, collimating protocols and combinations thereof. In certain embodiments, flow cytometers of interest include one or more focusing lenses. The focusing lens, in one example, may be a de-magnifying lens. In still other embodiments, flow cytometers of interest include fiber optics.

Where the optical adjustment component is configured to move, the optical adjustment component may be configured to be moved continuously or in discrete intervals, such as for example in 0.01 µm or greater increments, such as 0.05 µm or greater, such as 0.1 µm or greater, such as 0.5 µm or greater such as 1 µm or greater, such as 10 µm or greater, such as 100 µm or greater, such as 500 µm or greater, such as 1 mm or greater, such as 5 mm or greater, such as 10 mm or greater and including 25 mm or greater increments.

Any displacement protocol may be employed to move the optical adjustment component structures, such as coupled to a moveable support stage or directly with a motor actuated translation stage, leadscrew translation assembly, geared translation device, such as those employing a stepper motor, servo motor, brushless electric motor, brushed DC motor, micro-step drive motor, high resolution stepper motor, among other types of motors.

The light source may be positioned any suitable distance from the flow cell, such as where the light source and the flow cell are separated by 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source may be positioned at any suitable angle relative to the flow cell, such as at an angle ranging from 10 degrees to 90 degrees, such as from 15 degrees to 85 degrees, such as from 20 degrees to 80 degrees, such as from 25 degrees to 75 degrees and including from 30 degrees to 60 degrees, for example at a 90 degree angle.

In some embodiments, light sources of interest include a plurality of lasers configured to provide laser light for discrete irradiation of the flow stream, such as 2 lasers or more, such as 3 lasers or more, such as 4 lasers or more, such as 5 lasers or more, such as 10 lasers or more, and including 15 lasers or more configured to provide laser light for discrete irradiation of the flow stream. Depending on the desired wavelengths of light for irradiating the flow stream, each laser may have a specific wavelength that varies from 200 nm to 1500 nm, such as from 250 nm to 1250 nm, such as from 300 nm to 1000 nm, such as from 350 nm to 900 nm and including from 400 nm to 800 nm. In certain embodiments, lasers of interest may include one or more of a 405 nm laser, a 488 nm laser, a 561 nm laser and a 635 nm laser.

As discussed above, particle analyzers of interest may further include one or more particle-modulated light detectors for detecting particle-modulated light intensity data. In some embodiments, the particle-modulated light detector(s) include one or more forward-scattered light detectors configured to detect forward-scattered light. For example, the subject particle analyzers may include 1 forward-scattered light detector or multiple forward-scattered light detectors, such as 2 or more, such as 3 or more, such as 4 or more, and including 5 or more. In certain embodiments, particle analyzers include 1 forward-scattered light detector. In other embodiments, particle analyzers include 2 forward-scattered light detectors.

Any convenient detector for detecting collected light may be used in the forward-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

In embodiments, the forward-scattered light detector is configured to measure light continuously or in discrete intervals. In some instances, detectors of interest are configured to take measurements of the collected light continuously. In other instances, detectors of interest are configured to take measurements in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

In additional embodiments, the one or more particle-modulated light detector(s) may include one or more side-scattered light detectors for detecting side-scatter wavelengths of light (i.e., light refracted and reflected from the surfaces and internal structures of the particle). In some embodiments, particle analyzers include a single side-scattered light detector. In other embodiments, particle analyzers include multiple side-scattered light detectors, such as 2 or more, such as 3 or more, such as 4 or more, and including 5 or more.

Any convenient detector for detecting collected light may be used in the side-scattered light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

In embodiments, the subject particle analyzers also include a fluorescent light detector configured to detect one or more fluorescent wavelengths of light. In other embodiments, particle analyzers include multiple fluorescent light detectors such as 2 or more, such as 3 or more, such as 4 or more, 5 or more, 10 or more, 15 or more, and including 20 or more.

Any convenient detector for detecting collected light may be used in the fluorescent light detector described herein. Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In certain embodiments, the collected light is measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In certain embodiments, the detector is a photomultiplier tube, such as a photomultiplier tube having an active detecting surface area of each region that ranges from 0.01 cm² to 10 cm², such as from 0.05 cm² to 9 cm², such as from, such as from 0.1 cm² to 8 cm², such as from 0.5 cm² to 7 cm² and including from 1 cm² to 5 cm².

Where the subject particle analyzers include multiple fluorescent light detectors, each fluorescent light detector may be the same, or the collection of fluorescent light detectors may be a combination of different types of detectors. For example, where the subject particle analyzers include two fluorescent light detectors, in some embodiments the first fluorescent light detector is a CCD-type device and the second fluorescent light detector (or imaging sensor) is a CMOS-type device. In other embodiments, both the first and second fluorescent light detectors are CCD-type devices. In yet other embodiments, both the first and second fluorescent light detectors are CMOS-type devices. In still other embodiments, the first fluorescent light detector is a CCD-type device and the second fluorescent light detector is a photomultiplier tube (PMT). In still other embodiments, the first fluorescent light detector is a CMOS-type device and the second fluorescent light detector is a photomultiplier tube. In yet other embodiments, both the first and second fluorescent light detectors are photomultiplier tubes.

In embodiments of the present disclosure, fluorescent light detectors of interest are configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. In some embodiments, 2 or more detectors in the particle analyzers as described herein are configured to measure the same or overlapping wavelengths of collected light.

In some embodiments, fluorescent light detectors of interest are configured to measure collected light over a range of wavelengths (e.g., 200 nm - 1000 nm). In certain embodiments, detectors of interest are configured to collect spectra of light over a range of wavelengths. For example, particle analyzers may include one or more detectors configured to collect spectra of light over one or more of the wavelength ranges of 200 nm - 1000 nm. In yet other embodiments, detectors of interest are configured to measure light emitted by a sample in the flow stream at one or more specific wavelengths. For example, particle analyzers may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In certain embodiments, one or more detectors may be configured to be paired with specific fluorophores, such as those used with the sample in a fluorescence assay.

In some embodiments, particle analyzers include one or more wavelength separators positioned between the flow cell and the particle-modulated light detector(s). The term "wavelength separator" is used herein in its conventional sense to refer to an optical component that is configured to separate light collected from the sample into predetermined spectral ranges. In some embodiments, particle analyzers include a single wavelength separator. In other embodiments, particle analyzers include a plurality of wavelength separators, such as 2 or more wavelength separators, such as 3 or more, such as 4 or more, such as 5 or more, such as 6 or more, such as 7 or more, such as 8 or more, such as 9 or more, such as 10 or more, such as 15 or more, such as 25 or more, such as 50 or more, such as 75 or more and including 100 or more wavelength separators. In some embodiments, the wavelength separator is configured to separate light collected from the sample into predetermined spectral ranges by passing light having a predetermined spectral range and reflecting one or more remaining spectral ranges of light. In other embodiments, the wavelength separator is configured to separate light collected from the sample into predetermined spectral ranges by passing light having a predetermined spectral range and absorbing one or more remaining spectral ranges of light. In yet other embodiments, the wavelength separator is configured to spatially diffract light collected from the sample into predetermined spectral ranges. Each wavelength separator may be any convenient light separation protocol, such as one or more dichroic mirrors, bandpass filters, diffraction gratings, beam splitters or prisms. In some embodiments, the wavelength separator is a prism. In other embodiments, the wavelength separator is a diffraction grating. In certain embodiments, wavelength separators in the subject light detection systems are dichroic mirrors.

Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255. In certain instances, flow cytometry systems of interest include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer and BD Biosciences FACSCalibur^{™} cell sorter, a BD Biosciences FACSCount^{™} cell sorter, BD Biosciences FACSLyric^{™} cell sorter, BD Biosciences Via^{™} cell sorter, BD Biosciences Influx^{™} cell sorter, BD Biosciences Jazz^{™} cell sorter, BD Biosciences Aria^{™} cell sorter, BD Biosciences FACSAria^{™} II cell sorter, BD Biosciences FACSAria^{™} III cell sorter, BD Biosciences FACSAria^{™} Fusion cell sorter and BD Biosciences FACSMelody^{™} cell sorter, BD Biosciences FACSymphony^{™} S6 cell sorter or the like.

In some embodiments, the subject systems are flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766.

In certain instances, flow cytometry systems of the invention are configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661; 9,983,132; 10,006,852; 10,078,045; 10,036,699; 10,222,316; 10,288,546; 10,324,019; 10,408,758; 10,451,538; 10,620,111; and U.S. Patent Publication Nos. 2017/0133857; 2017/0328826; 2017/0350803; 2018/0275042; 2019/0376895 and 2019/0376894

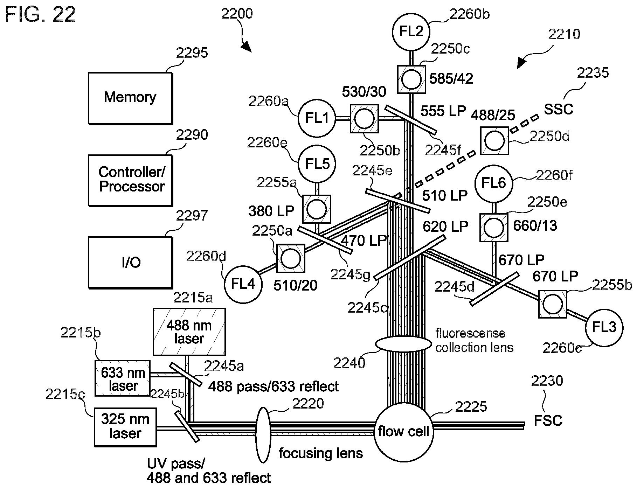

**FIG. 22** shows a system 2200 for flow cytometry in accordance with an illustrative embodiment of the present invention. The system 2200 includes a flow cytometer 2210, a controller/processor 2290 and a memory 2295. The flow cytometer 2210 includes one or more excitation lasers 2215a-2215c, a focusing lens 2220, a flow chamber 2225, a forward-scatter detector 2230, a side-scatter detector 2235, a fluorescence collection lens 2240, one or more beam splitters 2245a-2245g, one or more bandpass filters 2250a-2250e, one or more longpass ("LP") filters 2255a-2255b, and one or more fluorescent detectors 2260a-2260f.

The excitation lasers 2215a-c emit light in the form of a laser beam. The wavelengths of the laser beams emitted from excitation lasers 2215a-2215c are 488 nm, 633 nm, and 325 nm, respectively, in the example system of **FIG. 22****.** The laser beams are first directed through one or more of beam splitters 2245a and 2245b. Beam splitter 2245a transmits light at 488 nm and reflects light at 633 nm. Beam splitter 2245b transmits UV light (light with a wavelength in the range of 10 to 400 nm) and reflects light at 488 nm and 633 nm.

The laser beams are then directed to a focusing lens 2220, which focuses the beams onto the portion of a fluid stream where particles of a sample are located, within the flow chamber 2225. The flow chamber is part of a fluidics system which directs particles, typically one at a time, in a stream to the focused laser beam for interrogation. The flow chamber can comprise a flow cell in a benchtop cytometer or a nozzle tip in a stream-in-air cytometer.

The light from the laser beam(s) interacts with the particles in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more of the forward-scatter detector 2230, the side-scatter detector 2235, and the one or more fluorescent detectors 2260a-2260f through one or more of the beam splitters 2245c-2245g, the bandpass filters 2250a-2250e, the longpass filters 2255a-2255b, and the fluorescence collection lens 2240.

The fluorescence collection lens 2240 collects light emitted from the particle-laser beam interaction and routes that light towards one or more beam splitters and filters. Bandpass filters, such as bandpass filters 2250a-2250e, allow a narrow range of wavelengths to pass through the filter. For example, bandpass filter 2250a is a 510/20 filter. The first number represents the center of a spectral band. The second number provides a range of the spectral band. Thus, a 510/20 filter extends 10 nm on each side of the center of the spectral band, or from 500 nm to 520 nm. Shortpass filters transmit wavelengths of light equal to or shorter than a specified wavelength. Longpass filters, such as longpass filters 2255a-2255b, transmit wavelengths of light equal to or longer than a specified wavelength of light. For example, longpass filter 2255b, which is a 670 nm longpass filter, transmits light equal to or longer than 670 nm. Filters are often selected to optimize the specificity of a detector for a particular fluorescent dye. The filters can be configured so that the spectral band of light transmitted to the detector is close to the emission peak of a fluorescent dye.

The forward-scatter detector 2230 is positioned slightly off axis from the direct beam through the flow cell and is configured to detect diffracted light, the excitation light that travels through or around the particle in mostly a forward direction. The intensity of the light detected by the forward-scatter detector is dependent on the overall size of the particle. The forward-scatter detector can include a photodiode. The side-scatter detector 2235 is configured to detect refracted and reflected light from the surfaces and internal structures of the particle that tends to increase with increasing particle complexity of structure. The fluorescence emissions from fluorescent molecules associated with the particle can be detected by the one or more fluorescent detectors 2260a-2260f. The side-scatter detector 2235 and fluorescent detectors can include photomultiplier tubes. The signals detected at the forward-scatter detector 2230, the side-scatter detector 2235 and the fluorescent detectors can be converted to electronic signals (voltages) by the detectors. This data can provide information about the sample.

One of skill in the art will recognize that a flow cytometer in accordance with an embodiment of the present invention is not limited to the flow cytometer depicted in **FIG. 22****,** but can include any flow cytometer known in the art. For example, a flow cytometer may have any number of lasers, beam splitters, filters, and detectors at various wavelengths and in various different configurations.

In operation, cytometer operation is controlled by a controller/processor 2290, and the measurement data from the detectors can be stored in the memory 2295 and processed by the controller/processor 2290. Although not shown explicitly, the controller/processor 2290 is coupled to the detectors to receive the output signals therefrom, and may also be coupled to electrical and electromechanical components of the flow cytometer 2210 to control the lasers, fluid flow parameters, and the like. Input/output (I/O) capabilities 2297 may be provided also in the system. The memory 2295, controller/processor 2290, and I/O 2297 may be entirely provided as an integral part of the flow cytometer 2210. In such an embodiment, a display may also form part of the I/O capabilities 2297 for presenting experimental data to users of the cytometer 2210. Alternatively, some or all of the memory 2295 and controller/processor 2290 and I/O capabilities may be part of one or more external devices such as a general purpose computer. In some embodiments, some or all of the memory 2295 and controller/processor 2290 can be in wireless or wired communication with the cytometer 2210. The controller/processor 2290 in conjunction with the memory 2295 and the I/O 2297 can be configured to perform various functions related to the preparation and analysis of a flow cytometer experiment.

The system illustrated in **FIG. 22** includes six different detectors that detect fluorescent light in six different wavelength bands (which may be referred to herein as a "filter window" for a given detector) as defined by the configuration of filters and/or splitters in the beam path from the flow cell 2225 to each detector. Different fluorescent molecules used for a flow cytometer experiment will emit light in their own characteristic wavelength bands. The particular fluorescent labels used for an experiment and their associated fluorescent emission bands may be selected to generally coincide with the filter windows of the detectors. The I/O 2297 can be configured to receive data regarding a flow cytometer experiment having a panel of fluorescent labels and a plurality of cell populations having a plurality of markers, each cell population having a subset of the plurality of markers. The I/O 2297 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 2295. The controller/processor 2290 can be configured to evaluate one or more assignments of labels to markers.

In some embodiments, the subject systems are particle sorting systems that are configured to sort particles with an enclosed particle sorting module, such as those described in U.S. Patent Publication No. 2017/0299493, filed on March 28, 2017. In certain embodiments, particles (e.g., cells) of the sample are sorted using a sort decision module having a plurality of sort decision units, such as those described in U.S. Patent Publication No. 2020/0256781, filed on December 23, 2019. In some embodiments, systems for sorting components of a sample include a particle sorting module having deflection plates, such as described in U.S. Patent Publication No. 2017/0299493, filed on March 28, 2017.

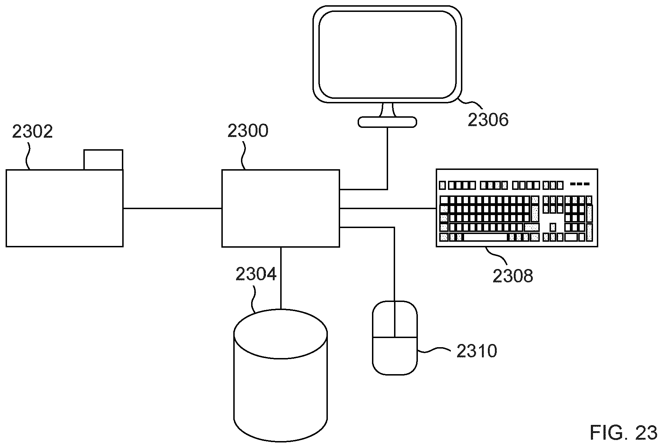

**FIG. 23** shows a functional block diagram for one example of a sorting control system, such as a processor 2300, for analyzing and displaying biological events. A processor 2300 can be configured to implement a variety of processes for controlling graphic display of biological events.

A flow cytometer or sorting system 2302 can be configured to acquire biological event data. For example, a flow cytometer can generate flow cytometric event data (e.g., particle-modulated light data). The flow cytometer 2302 can be configured to provide biological event data to the processor 2300. A data communication channel can be included between the flow cytometer 2302 and the processor 2300. The biological event data can be provided to the processor 2300 via the data communication channel.

The processor 2300 can be configured to receive biological event data from the flow cytometer 2302. The biological event data received from the flow cytometer 2302 can include flow cytometric event data. The processor 2300 can be configured to provide a graphical display including a first plot of biological event data to a display device 2306. The processor 2300 can be further configured to render a region of interest as a gate around a population of biological event data shown by the display device 2306, overlaid upon the first plot, for example. In some embodiments, the gate can be a logical combination of one or more graphical regions of interest drawn upon a single parameter histogram or bivariate plot. In some embodiments, the display can be used to display particle parameters or saturated detector data.

The processor 2300 can be further configured to display the biological event data on the display device 2306 within the gate differently from other events in the biological event data outside of the gate. For example, the processor 2300 can be configured to render the color of biological event data contained within the gate to be distinct from the color of biological event data outside of the gate. The display device 2306 can be implemented as a monitor, a tablet computer, a smartphone, or other electronic device configured to present graphical interfaces.

The processor 2300 can be configured to receive a gate selection signal identifying the gate from a first input device. For example, the first input device can be implemented as a mouse 2310. The mouse 2310 can initiate a gate selection signal to the processor 2300 identifying the gate to be displayed on or manipulated via the display device 2306 (e.g., by clicking on or in the desired gate when the cursor is positioned there). In some implementations, the first device can be implemented as the keyboard 2308 or other means for providing an input signal to the processor 2300 such as a touchscreen, a stylus, an optical detector, or a voice recognition system. Some input devices can include multiple inputting functions. In such implementations, the inputting functions can each be considered an input device. For example, as shown in **FIG. 23****,** the mouse 2310 can include a right mouse button and a left mouse button, each of which can generate a triggering event.

The triggering event can cause the processor 2300 to alter the manner in which the data is displayed, which portions of the data is actually displayed on the display device 2306, and/or provide input to further processing such as selection of a population of interest for particle sorting. In some embodiments, the processor 2300 can be configured to detect when gate selection is initiated by the mouse 2310. The processor 2300 can be further configured to automatically modify plot visualization to facilitate the gating process.

The processor 2300 can be connected to a storage device 2304. The storage device 2304 can be configured to receive and store biological event data from the processor 2300. The storage device 2304 can also be configured to receive and store flow cytometric event data from the processor 2300. The storage device 2304 can be further configured to allow retrieval of biological event data, such as flow cytometric event data, by the processor 2300.

The display device 2306 can be configured to receive display data from the processor 2300. The display data can comprise plots of biological event data and gates outlining sections of the plots. The display device 2306 can be further configured to alter the information presented according to input received from the processor 2300 in conjunction with input from the flow cytometer 2302, the storage device 2304, the keyboard 2308, and/or the mouse 2310.

In some implementations the processor 2300 can generate a user interface to receive example events for sorting. For example, the user interface can include a mechanism for receiving example events or example images. The example events or images or an example gate can be provided prior to collection of event data for a sample or based on an initial set of events for a portion of the sample.

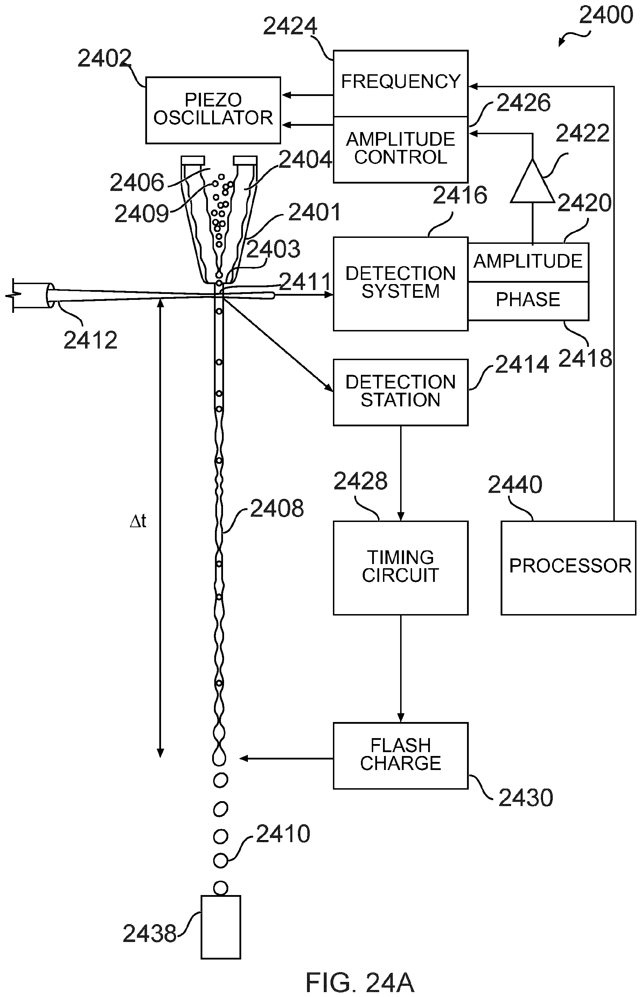

**FIG. 24A** is a schematic drawing of a particle sorter system 2400 (e.g., the flow cytometer 2302) in accordance with one embodiment presented herein. In some embodiments, the particle sorter system 2400 is a cell sorter system. As shown in **FIG. 24A****,** a drop formation transducer 2402 (e.g., piezo-oscillator) is coupled to a fluid conduit 2401, which can be coupled to, can include, or can be, a nozzle 2403. Within the fluid conduit 2401, sheath fluid 2404 hydrodynamically focuses a sample fluid 2406 comprising particles 2409 into a moving fluid column 2408 (e.g. a stream). Within the moving fluid column 2408, particles 2409 (e.g., cells) are lined up in single file to cross a monitored area 2411 (e.g., where laser-stream intersect), irradiated by an irradiation source 2412 (e.g., a laser). Vibration of the drop formation transducer 2402 causes moving fluid column 2408 to break into a plurality of drops 2410, some of which contain particles 2409.

In operation, a detection station 2414 (e.g., an event detector) identifies when a particle of interest (or cell of interest) crosses the monitored area 2411. Detection station 2414 feeds into a timing circuit 2428, which in turn feeds into a flash charge circuit 2430. At a drop break off point, informed by a timed drop delay (Δt), a flash charge can be applied to the moving fluid column 2408 such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in **FIG. 24A****,** the drops can be collected in a drain receptacle 2438.

A detection system 2416 (e.g. a drop boundary detector) serves to automatically determine the phase of a drop drive signal when a particle of interest passes the monitored area 2411. An exemplary drop boundary detector is described in U.S. Pat. No. 7,679,039. The detection system 2416 allows the instrument to accurately calculate the place of each detected particle in a drop. The detection system 2416 can feed into an amplitude signal 2420 and/or phase 2418 signal, which in turn feeds (via amplifier 2422) into an amplitude control circuit 2426 and/or frequency control circuit 2424. The amplitude control circuit 2426 and/or frequency control circuit 2424, in turn, controls the drop formation transducer 2402. The amplitude control circuit 2426 and/or frequency control circuit 2424 can be included in a control system.

In some implementations, sort electronics (e.g., the detection system 2416, the detection station 2414 and a processor 2440) can be coupled with a memory configured to store the detected events and a sort decision based thereon. The sort decision can be included in the event data for a particle. In some implementations, the detection system 2416 and the detection station 2414 can be implemented as a single detection unit or communicatively coupled such that an event measurement can be collected by one of the detection system 2416 or the detection station 2414 and provided to the non-collecting element.

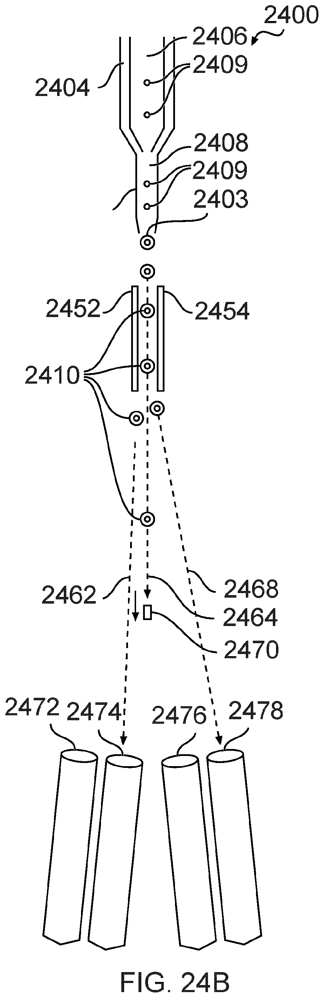

**FIG. 24B** is a schematic drawing of a particle sorter system, in accordance with one embodiment presented herein. The particle sorter system 2400 shown in **FIG. 24B****,** includes deflection plates 2452 and 2454. A charge can be applied via a stream-charging wire in a barb. This creates a stream of droplets 2410 containing particles 2409 for analysis. The particles can be illuminated with one or more light sources (e.g., lasers) to generate light scatter and fluorescence information. The information for a particle is analyzed such as by sorting electronics or other detection system (not shown in **FIG. 24B**)**.** The deflection plates 2452 and 2454 can be independently controlled to attract or repel the charged droplet to guide the droplet toward a destination collection vessel (e.g., one of 2472, 2474, 2476, or 2478). As shown in **FIG. 24B****,** the deflection plates 2452 and 2454 can be controlled to direct a particle along a first path 2462 toward the vessel 2474 or along a second path 2468 toward the vessel 2478. If the particle is not of interest (e.g., does not exhibit scatter or illumination information within a specified sort range), deflection plates may allow the particle to continue along a flow path 2464. Such uncharged droplets may pass into a waste receptacle such as via aspirator 2470.

The sorting electronics can be included to initiate collection of measurements, receive fluorescence signals for particles, and determine how to adjust the deflection plates to cause sorting of the particles. Example implementations of the embodiment shown in **FIG. 24B** include the BD FACSAria^{™} line of flow cytometers commercially provided by Becton, Dickinson and Company (Franklin Lakes, NJ).

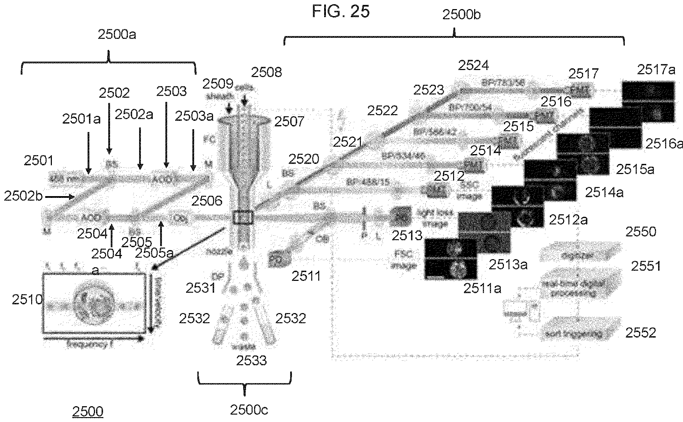

In some embodiments where the flow cytometer is a cell sorter, the flow cytometer is an image-enabled particle sorter. In such embodiments, the fluid supply system of the invention may be used to supply operating fluid, primary flushing fluid and/or secondary fluids to a flow cell of the image-enabled particle sorter. In certain embodiments, systems are a fluorescence imaging using radiofrequency tagged emission image-enabled particle sorter, such as depicted in **FIG. 25****.** Particle sorter 2500 includes a light irradiation component 2500a which includes light source 2501 (e.g., 488 nm laser) which generates output beam of light 2501a that is split with beamsplitter 2502 into beams 2502a and 2502b. Light beam 2502a is propagated through acousto-optic device (e.g., an acousto-optic deflector, AOD) 2503 to generate an output beam 2503a having one or more angularly deflected beams of light. In some instances, output beam 2503a generated from acousto-optic device 2503 includes a local oscillator beam and a plurality of radiofrequency comb beams. Light beam 2502b is propagated through acousto-optic device (e.g., an acousto-optic deflector, AOD) 2504 to generate an output beam 2504a having one or more angularly deflected beams of light. In some instances, output beam 2504a generated from acousto-optic device 2504 includes a local oscillator beam and a plurality of radiofrequency comb beams. Output beams 2503a and 2504a generated from acousto-optic devices 2503 and 2504, respectively are combined with beamsplitter 2505 to generate output beam 2505a which is conveyed through an optical component 2506 (e.g., an objective lens) to irradiate particles in flow cell 2507. In certain embodiments, acousto-optic device 2503 (AOD) splits a single laser beam into an array of beamlets, each having different optical frequency and angle. Second AOD 2504 tunes the optical frequency of a reference beam, which is then overlapped with the array of beamlets at beam combiner 2505. In certain embodiments, the light irradiation system having a light source and acousto-optic device can also include those described in Schraivogel, et al. ("High-speed fluorescence image-enabled cell sorting" Science (2022), 375 (6578): 315-320) and United States Patent Publication No. 2021/0404943.

Output beam 2505a irradiates sample particles 2508 propagating through flow cell 2507 (e.g., with sheath fluid 2509) at irradiation region 2510. Sheath fluid 2509 may be supplied to flow cell 2507 by a fluid supply system of the invention, e.g., as described above. As shown in irradiation region 2510, a plurality of beams (e.g., angularly deflected radiofrequency shifted beams of light depicted as dots across irradiation region 2510) overlaps with a reference local oscillator beam (depicted as the shaded line across irradiation region 2510). Due to their differing optical frequencies, the overlapping beams exhibit a beating behavior, which causes each beamlet to carry a sinusoidal modulation at a distinct frequency f₁₋ₙ.

Light from the irradiated sample is conveyed to light detection system 2500b that includes a plurality of photodetectors. Light detection system 2500b includes forward scattered light photodetector 2511 for generating forward scatter images 2511a and a side scattered light photodetector 2512 for generating side scatter images 2512a. Light detection system 2500b also includes brightfield photodetector 2513 for generating light loss images 2513a. In some embodiments, forward scatter detector 2511 and side scatter detector 2512 are photodiodes (e.g., avalanche photodiodes, APDs). In some instances, brightfield photodetector 2513 is a photomultiplier tube (PMT). Fluorescence from the irradiated sample is also detected with fluorescence photodetectors 2514-2517. In some instances, photodetectors 2514-2517 are photomultiplier tubes. Light from the irradiated sample is directed to the side scatter detection channel 2512 and fluorescence detection channels 2514-2517 through beamsplitter 2520. Light detection system 2500b includes bandpass optical components 2521, 2522, 2523 and 2524 (e.g., dichroic mirrors) for propagating predetermined wavelength of light to photodetectors 2514-2517. In some instances, optical component 2521 is a 534 nm/40 nm bandpass. In some instances, optical component 2522 is a 586 nm/42 nm bandpass. In some instances, optical component 2523 is a 700 nm/54 nm bandpass. In some instances, optical component 2524 is a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 2511 and 2512, brightfield light detection channel 2513 and fluorescence detection channels 2514-2517 are processed by real-time digital processing with processors 2550 and 2551. Images 2511a-2517a can be generated in each light detection channel based on the data signals generated in processors 2550 and 2551. Image-enabled sorting is performed in response to a sort signal generated in sort trigger 2552. Sorting component 2500c includes deflection plates 2531 for deflecting particles into sample containers 2532 or to waste stream 2533. In some instances, sort component 2500c is configured to sort particles with an enclosed particle sorting module, such as those described in U.S. Patent Publication No. 2017/0299493, filed on March 28, 2017. In certain embodiments, sorting component 2500c includes a sort decision module having a plurality of sort decision units, such as those described in U.S. Patent Publication No. 2020/0256781.

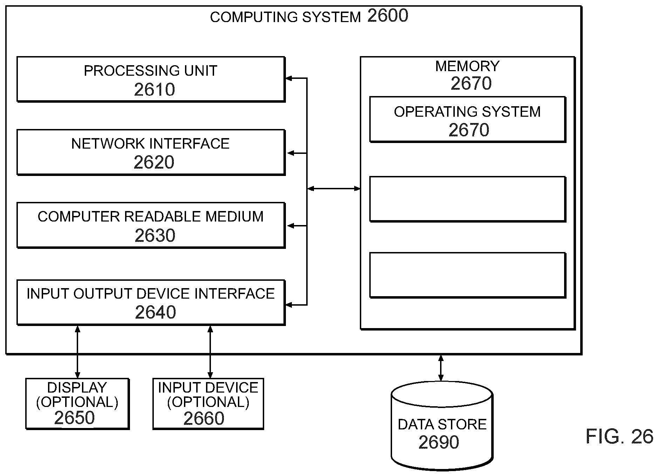

**FIG. 26** depicts a general architecture of an example computing device 2600 according to certain embodiments. The general architecture of the computing device 2600 depicted in **FIG. 26** includes an arrangement of computer hardware and software components. It is not necessary, however, that all of these generally conventional elements be shown in order to provide an enabling disclosure. As illustrated, the computing device 2600 includes a processing unit 2610, a network interface 2620, a computer readable medium drive 2630, an input/output device interface 2640, a display 2650, and an input device 2660, all of which may communicate with one another by way of a communication bus. The network interface 2620 may provide connectivity to one or more networks or computing systems. The processing unit 2610 may thus receive information and instructions from other computing systems or services via a network. The processing unit 2610 may also communicate to and from memory 2670 and further provide output information for an optional display 2650 via the input/output device interface 2640. For example, an analysis software (e.g., data analysis software or program such as FlowJo^{®}) stored as executable instructions in the non-transitory memory of the analysis system can display the flow cytometry event data to a user. The input/output device interface 2640 may also accept input from the optional input device 2660, such as a keyboard, mouse, digital pen, microphone, touch screen, gesture recognition system, voice recognition system, gamepad, accelerometer, gyroscope, or other input device. Data may additionally be stored in data storage 2690.

### METHODS OF ANALYZING A SAMPLE

Aspects of the invention additionally include methods of analyzing a sample. Methods of interest include (a) introducing the sample into an instrument comprising a fluid supply system, and (b) supplying operating fluid to the instrument to analyze the sample. Fluid supply systems for use in the methods are described above, and include an operating fluid line configured to transport an operating fluid therethrough from a proximal end to a distal end, and comprising an operating fluid reservoir connector at the proximal end configured to fluidically couple to an operating fluid reservoir comprising the operating fluid; a primary flushing fluid line configured to transport a primary flushing fluid therethrough from a proximal end to a distal end, and comprising a primary flushing fluid reservoir connector at the proximal end configured to fluidically couple to a primary flushing fluid reservoir comprising the primary flushing fluid; a secondary fluid line configured to transport a secondary fluid therethrough from a proximal end to a distal end, and comprising a secondary fluid reservoir connector at the proximal end configured to fluidically couple to a secondary fluid reservoir comprising the secondary fluid; a flow control circuit fluidically connected to the distal end of the primary flushing fluid line and the distal end of the secondary fluid line, and configured to selectively permit passage of the primary flushing fluid and the secondary fluid through an outlet; and a single fluidic connection configured to fluidically couple to the flow control circuit, the operating fluid line, and a fluidic component of an instrument.

In some instances, the sample analyzed in the instant methods is a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In certain embodiments, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In certain embodiments the source of the sample is a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). In some instances, the subjects are humans. The methods may be applied to samples obtained from human subjects of both genders and at any stage of development (i.e., neonates, infant, juvenile, adolescent, adult), where in certain embodiments the human subject is a juvenile, adolescent or adult. While the present invention may be applied to samples from a human subject, it is to be understood that the methods may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. In some embodiments, the system is configured to deflect analyzed droplets that are determined to include a target cell. A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. In some embodiments, the target cell is selected from HIV containing cell, a Treg cell, an antigen-specific T -cell populations, tumor cells or hematopoietic progenitor cells (CD34+) from whole blood, bone marrow or cord blood.

Methods of interest may further include employing particles in research, laboratory testing, or therapy. In some embodiments, the subject methods include obtaining individual cells prepared from a target fluidic or tissue biological sample. For example, the subject methods include obtaining cells from fluidic or tissue samples to be used as a research or diagnostic specimen for diseases such as cancer. Likewise, the subject methods include obtaining cells from fluidic or tissue samples to be used in therapy. A cell therapy protocol is a protocol in which viable cellular material including, e.g., cells and tissues, may be prepared and introduced into a subject as a therapeutic treatment. Conditions that may be treated by the administration of the flow cytometrically sorted sample include, but are not limited to, blood disorders, immune system disorders, organ damage, etc.

A typical cell therapy protocol may include the following steps: sample collection, cell isolation, genetic modification, culture, and expansion in vitro, cell harvesting, sample volume reduction and washing, bio-preservation, storage, and introduction of cells into a subject. The protocol may begin with the collection of viable cells and tissues from source tissues of a subject to produce a sample of cells and/or tissues. The sample may be collected via any suitable procedure that includes, e.g., administering a cell mobilizing agent to a subject, drawing blood from a subject, removing bone marrow from a subject, etc. After collecting the sample, cell enrichment may occur via several methods including, e.g., centrifugation based methods, filter based methods, elutriation, magnetic separation methods, fluorescence-activated cell sorting (FACS), and the like. In some cases, the enriched cells may be genetically modified by any convenient method, e.g., nuclease mediated gene editing. The genetically modified cells can be cultured, activated, and expanded in vitro. In some cases, the cells are preserved, e.g., cryopreserved, and stored for future use where the cells are thawed and then administered to a patient, e.g., the cells may be infused in the patient.

### METHODS OF ASSEMBLING AN INSTRUMENT

Aspects of the invention additionally include methods of assembling an instrument. Methods of interest include operably connecting a fluid supply system of the invention to a fluidic component (e.g., flow cell) of an instrument (e.g., flow cytometer). Fluid supply systems for use in the methods are described above, and include an operating fluid line configured to transport an operating fluid therethrough from a proximal end to a distal end, and comprising an operating fluid reservoir connector at the proximal end configured to fluidically couple to an operating fluid reservoir comprising the operating fluid; a primary flushing fluid line configured to transport a primary flushing fluid therethrough from a proximal end to a distal end, and comprising a primary flushing fluid reservoir connector at the proximal end configured to fluidically couple to a primary flushing fluid reservoir comprising the primary flushing fluid; a secondary fluid line configured to transport a secondary fluid therethrough from a proximal end to a distal end, and comprising a secondary fluid reservoir connector at the proximal end configured to fluidically couple to a secondary fluid reservoir comprising the secondary fluid; a flow control circuit fluidically connected to the distal end of the primary flushing fluid line and the distal end of the secondary fluid line, and configured to selectively permit passage of the primary flushing fluid and the secondary fluid through an outlet; and a single fluidic connection configured to fluidically couple to the flow control circuit, the operating fluid line, and a fluidic component of an instrument.

In some embodiments, methods include fluidically coupling the operating fluid reservoir to the operating fluid line. In some instances, methods additionally include operably connecting a pressurized air source to the operating fluid reservoir. In some such instances, methods include operably connecting a pressure regulator to the operating fluid reservoir and the pressurized air source. In certain cases, methods include fluidically coupling the primary flushing fluid reservoir to the primary flushing fluid line. In select implementations, methods include fluidically coupling the secondary fluid reservoir to the secondary fluid line. Methods may also include fluidically coupling a plurality of secondary fluid lines to a plurality of secondary fluid reservoirs. Where the flow control circuit of the fluid supply system includes a bank of valves, methods according to some embodiments include fluidically coupling the distal end of the primary flushing fluid line to a valve in the bank of valves that is furthest from the outlet of the flow control circuit. In certain instances, methods include operably connecting a vacuum source to the fluidic component of the instrument.

### UTILITY

The flow type particle analyzers having fluid supply systems and methods of using the same of the present disclosure find use in a variety of different applications, including, e.g., research and clinical applications. The flow type particle analyzers may find use in applications where it is desirable to analyze and/or analyze and sort particle components in a sample, e.g., a biological sample. Fluid supply systems of the present disclosure may be incorporated in any suitable flow type particle system, e.g., flow cytometer system. The fluid supply systems may find use in any suitable flow type particle analyzer applications where a cleaning fluid is flowed through a flow type particle analyzer to clean the fluid management system. The fluid supply systems may find use in applications where particular fluid pathway volumes in a fluid management system are inaccessible and it is desirable to have 100% swept cleaning of the system. The fluid management systems, e.g., having waste management control with a single fluid movement device, may find use in applications where it is desirable to decrease the cost and complexity of production and operation of flow type particle analyzers. The fluid management systems, e.g., the hybrid systems as described herein, may further find use in applications where increased flexibility in particle analysis is desired. Suitable applications include those where it is desirable to switch between (a) analyzing and (b) analyzing and sorting modes for a flow type particle analyzer. Such applications may include clinical or research applications where it is desirable, e.g., cost-effective, to have the flexibility to perform (a) particle analysis or (b) particle analysis and sorting with a single flow cytometric system in the same laboratory or clinical setting.

The fluid supply systems described herein may be employed in a variety of different flow type particle analyzers, e.g., flow cytometers. Suitable flow cytometry systems in which the subject fluid managements systems may be employed include, but are not limited to, those described in U.S. Patent Nos. 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039. In certain instances, flow cytometry systems of interest include the BD Biosciences FACSCantoTM II flow cytometer, BD AccuriTM flow cytometer, BD Biosciences FACSCelestaTM flow cytometer, BD Biosciences FACSLyricTM flow cytometer, BD Biosciences FACSVerseTM flow cytometer, BD Biosciences FACSymphonyTM flow cytometer BD Biosciences LSRFortessaTM flow cytometer, BD Biosciences LSRFortessTM X-20 flow cytometer and the like.

Additional suitable flow cytometry systems include, but are not limited to, the sorting flow cytometers described in U.S. Patent No. 3,960,449; 4,347,935; 4,667,830; 4,704,891; 4,770,992; 5,030,002; 5,040,890; 5,047,321; 5,245,318; 5,317,162; 5,464,581; 5,483,469; 5,602,039; 5,620,842; 5,627,040; 5,643,796; 5,700,692; 6,372,506;6,809,804; 6,813,017; 6,821,740; 7,129,505; 7,201,875; 7,544,326; 8,140,300; 8,233,146; 8,753,573; 8,975,595; 9,092,034; 9,095,494 and 9,097,640. In some instances, the sorting flow cytometer is a Becton Dickinson cell sort, such as the BD Biosciences Influx^{™} cell sorter, BD Biosciences FACSAria^{™} III and BD FACSAria^{™} Fusion cell sorters, BD Biosciences FACSJazz^{™} cell sorter, the BD Biosciences FACSMelody^{™} cell sorter, and the like.

Notwithstanding the appended claims, the disclosure is also defined by the following clauses:
1. A fluid supply system comprising:
   an operating fluid line configured to transport an operating fluid therethrough from a proximal end to a distal end, and comprising an operating fluid reservoir connector at the proximal end configured to fluidically couple to an operating fluid reservoir comprising the operating fluid;
   a primary flushing fluid line configured to transport a primary flushing fluid therethrough from a proximal end to a distal end, and comprising a primary flushing fluid reservoir connector at the proximal end configured to fluidically couple to a primary flushing fluid reservoir comprising the primary flushing fluid;
   a secondary fluid line configured to transport a secondary fluid therethrough from a proximal end to a distal end, and comprising a secondary fluid reservoir connector at the proximal end configured to fluidically couple to a secondary fluid reservoir comprising the secondary fluid;
   a flow control circuit fluidically connected to the distal end of the primary flushing fluid line and the distal end of the secondary fluid line, and configured to selectively permit passage of the primary flushing fluid and the secondary fluid through an outlet; and
   a single fluidic connection configured to fluidically couple to the flow control circuit, the operating fluid line, and a fluidic component of an instrument.
2. The fluid supply system according to Clause 1, wherein the single fluidic connection is comprised of a quick connect fluid connector.
3. The fluid supply system according to Clause 1, wherein the single fluidic connection is comprised of a three-way valve.
4. The fluid supply system according to Clause 3, wherein the three-way valve has an internal volume ranging from 5 mm³ to 100 mm³.
5. The fluid supply system according to any one of the preceding clauses, further comprising a fluid supply pump operably connected to the flow control circuit and the single fluidic connection.
6. The fluid supply system according to any one of the preceding clauses, further comprising the operating fluid reservoir fluidically coupled to the operating fluid line.
7. The fluid supply system according to Clause 6, wherein the operating fluid is a sheath fluid.
8. The fluid supply system according to Clause 6 or 7, further comprising a pressurized air source operably connected to the operating fluid reservoir.
9. The fluid supply system according to Clause 8, further comprising a pressure regulator operably connected to the operating fluid reservoir and the pressurized air source.
10. The fluid supply system according to any one of the preceding clauses, further comprising an operating fluid supply pump operably connected to the single fluidic connection.
11. The fluid supply system according to any one of the preceding clauses, further comprising the primary flushing fluid reservoir fluidically coupled to the primary flushing fluid line.
12. The fluid supply system according to Clause 11, wherein the primary flushing fluid is an inert fluid.
13. The fluid supply system according to any one of the preceding clauses, further comprising the secondary fluid reservoir fluidically coupled to the secondary fluid line.
14. The fluid supply system according to Clause 13, wherein the secondary fluid is selected from a cleaning fluid and a reagent.
15. The fluid supply system according to any one of the preceding clauses, wherein the fluid supply system comprises a plurality of secondary fluid lines.
16. The fluid supply system according to Clause 15, wherein the number of secondary fluid lines in the plurality ranges from 1 to 10.
17. The fluid supply system according to any one of the preceding clauses, wherein the flow control circuit comprises a bank of valves.
18. The fluid supply system according to Clause 17, wherein the flow control circuit comprises a bank of two-way valves.
19. The fluid supply system according to Clause 18, wherein the two-way valves are standalone valves.
20. The fluid supply system according to Clause 18, wherein the two-way valves are mounted on a manifold.
21. The fluid supply system according to Clause 17, wherein the flow control circuit comprises a bank of three-way valves.
22. The fluid supply system according to Clause 21, wherein the three-way valves are standalone valves.
23. The fluid supply system according to Clause 21, wherein the three-way valves are mounted on a manifold.
24. The fluid supply system according to any one of Clauses 17 to 23, wherein the distal end of the primary flushing fluid line is fluidically coupled to a valve in the bank of valves that is furthest from the outlet of the flow control circuit.
25. The fluid supply system according to any one of Clauses 1 to 16, wherein the flow control circuit comprises a multi-port selection valve.
26. The fluid supply system according to Clause 25, wherein the multi-port selection valve has an internal volume ranging from 5 mm³ to 1000 mm³.
27. The fluid supply system according to any one of the preceding clauses, further comprising the instrument.
28. The fluid supply system according to Clause 27, wherein the instrument is a flow cytometer.
29. The fluid supply system according to Clause 28, wherein the fluidic component of the instrument is a flow cell.
30. The fluid supply system according to any one of Clauses 27 to 29, further comprising a vacuum source operably connected to the fluidic component of the instrument.
31. A method of analyzing a sample, the method comprising:
   (a) introducing the sample into an instrument comprising a fluid supply system comprising:
      an operating fluid line configured to transport an operating fluid therethrough from a proximal end to a distal end, and comprising an operating fluid reservoir connector at the proximal end configured to fluidically couple to an operating fluid reservoir comprising the operating fluid;
      a primary flushing fluid line configured to transport a primary flushing fluid therethrough from a proximal end to a distal end, and comprising a primary flushing fluid reservoir connector at the proximal end configured to fluidically couple to a primary flushing fluid reservoir comprising the primary flushing fluid;
      a secondary fluid line configured to transport a secondary fluid therethrough from a proximal end to a distal end, and comprising a secondary fluid reservoir connector at the proximal end configured to fluidically couple to a secondary fluid reservoir comprising the secondary fluid;
      a flow control circuit fluidically connected to the distal end of the primary flushing fluid line and the distal end of the secondary fluid line, and configured to selectively permit passage of the primary flushing fluid and the secondary fluid through an outlet; and
      a single fluidic connection configured to fluidically couple to the flow control circuit, the operating fluid line, and a fluidic component of an instrument; and
   (b) supplying the operating fluid to the instrument to analyze the sample.
32. The method according to Clause 31, wherein the single fluidic connection is comprised of a quick connect fluid connector.
33. The method according to Clause 31, wherein the single fluidic connection is comprised of a three-way valve.
34. The method according to Clause 33, wherein the three-way valve has an internal volume ranging from 5 mm³ to 100 mm³.
35. The method according to any one of Clauses 31 to 34, wherein the fluid supply subsystem further comprises a fluid supply pump operably connected to the flow control circuit and the single fluidic connection.
36. The method according to any one of Clauses 31 to 35, wherein the fluid supply system further comprises the operating fluid reservoir fluidically coupled to the operating fluid line.
37. The method according to Clause 36, wherein the operating fluid is a sheath fluid.
38. The method according to Clause 36 or 37, wherein the fluid supply system further comprises a pressurized air source operably connected to the operating fluid reservoir.
39. The method according to Clause 38, wherein the fluidic control system further comprises a pressure regulator operably connected to the operating fluid reservoir and the pressurized air source.
40. The method according to any one of Clauses 31 to 39, wherein the fluid supply system further comprises an operating fluid supply pump operably connected to the single fluidic connection.
41. The method according to any one of Clauses 31 to 40, wherein the fluid supply system further comprises the primary flushing fluid reservoir fluidically coupled to the primary flushing fluid line.
42. The method according to Clause 41, wherein the primary flushing fluid is an inert fluid.
43. The method according to any one of Clauses 31 to 42, wherein the fluid supply system further comprises the secondary fluid reservoir fluidically coupled to the secondary fluid line.
44. The method according to Clause 43, wherein the secondary fluid is selected from a cleaning fluid and a reagent.
45. The method according to any one of Clauses 31 to 44, wherein the fluid supply system comprises a plurality of secondary fluid lines.
46. The method according to Clause 45, wherein the number of secondary fluid lines in the plurality ranges from 1 to 10.
47. The method according to any one of Clauses 31 to 46, wherein the flow control circuit comprises a bank of valves.
48. The method according to Clause 47, wherein the flow control circuit comprises a bank of two-way valves.
49. The method according to Clause 48, wherein the two-way valves are standalone valves.
50. The method according to Clause 48, wherein the two-way valves are mounted on a manifold.
51. The method according to Clause 47, wherein the flow control circuit comprises a bank of three-way valves.
52. The method according to Clause 51, wherein the three-way valves are standalone valves.
53. The method according to Clause 51, wherein the three-way valves are mounted on a manifold.
54. The method according to any one of Clauses 47 to 53, wherein the distal end of the primary flushing fluid line is fluidically coupled to a valve in the bank of valves that is furthest from the outlet of the flow control circuit.
55. The method according to any one of Clauses 31 to 46, wherein the flow control circuit comprises a multi-port selection valve.
56. The method according to Clause 55, wherein the multi-port selection valve has an internal volume ranging from 5 mm³ to 1000 mm³.
57. The method according to any one of Clauses 31 to 56, wherein the instrument is a flow cytometer.
58. The method according to Clause 57, wherein the fluidic component of the instrument is a flow cell.
59. The method according to any one of Clauses 57 to 58, wherein the fluidic supply system comprises a vacuum source operably connected to the fluidic component of the instrument.
60. The method according to any one of Clauses 31 to 59, wherein the sample is a biological sample.
61. A method of assembling an instrument, the method comprising operably connecting a fluid supply system to a fluidic component of an instrument, the fluid supply system comprising:
   an operating fluid line configured to transport an operating fluid therethrough from a proximal end to a distal end, and comprising an operating fluid reservoir connector at the proximal end configured to fluidically couple to an operating fluid reservoir comprising the operating fluid;
   a primary flushing fluid line configured to transport a primary flushing fluid therethrough from a proximal end to a distal end, and comprising a primary flushing fluid reservoir connector at the proximal end configured to fluidically couple to a primary flushing fluid reservoir comprising the primary flushing fluid;
   a secondary fluid line configured to transport a secondary fluid therethrough from a proximal end to a distal end, and comprising a secondary fluid reservoir connector at the proximal end configured to fluidically couple to a secondary fluid reservoir comprising the secondary fluid;
   a flow control circuit fluidically connected to the distal end of the primary flushing fluid line and the distal end of the secondary fluid line, and configured to selectively permit passage of the primary flushing fluid and the secondary fluid through an outlet; and
   a single fluidic connection configured to fluidically couple to the flow control circuit, the operating fluid line, and a fluidic component of an instrument.
62. The method according to Clause 61, wherein the single fluidic connection is comprised of a quick connect fluid connector.
63. The method according to Clause 61, wherein the single fluidic connection is comprised of a three-way valve.
64. The method according to Clause 63, wherein the three-way valve has an internal volume ranging from 5 mm³ to 100 mm³.
65. The method according to any one of Clauses 61 to 64, wherein the fluid supply system further comprises a fluid supply pump operably connected to the flow control circuit and the single fluidic connection.
66. The method according to any one of Clauses 61 to 65, further comprising fluidically coupling the operating fluid reservoir to the operating fluid line.
67. The method according to Clause 66, wherein the operating fluid is a sheath fluid.
68. The method according to Clause 66 or 67, further comprising operably connecting a pressurized air source to the operating fluid reservoir.
69. The method according to Clause 68, further comprising operably connecting a pressure regulator to the operating fluid reservoir and the pressurized air source.
70. The method according to any one of Clauses 61 to 69, wherein the fluid supply system further comprises an operating fluid supply pump operably connected to the single fluidic connection.
71. The method according to any one of Clauses 61 to 70, further comprising fluidically coupling the primary flushing fluid reservoir to the primary flushing fluid line.
72. The method according to Clause 71, wherein the primary flushing fluid is an inert fluid.
73. The method according to any one of Clauses 61 to 72, further comprising fluidically coupling the secondary fluid reservoir to the secondary fluid line.
74. The method according to Clause 73, wherein the secondary fluid is selected from a cleaning fluid and a reagent.
75. The method according to any one of Clauses 61 to 74, wherein the fluid supply system comprises a plurality of secondary fluid lines.
76. The method according to Clause 75, wherein the number of secondary fluid lines in the plurality ranges from 1 to 10.
77. The method according to any one of Clauses 61 to 76, wherein the flow control circuit comprises a bank of valves.
78. The method according to Clause 77, wherein the flow control circuit comprises a bank of two-way valves.
79. The method according to Clause 78, wherein the two-way valves are standalone valves.
80. The method according to Clause 78, wherein the two-way valves are mounted on a manifold.
81. The method according to Clause 77, wherein the flow control circuit comprises a bank of three-way valves.
82. The method according to Clause 81, wherein the three-way valves are standalone valves.
83. The method according to Clause 81, wherein the three-way valves are mounted on a manifold.
84. The method according to any one of Clauses 77 to 83, further comprising fluidically coupling the distal end of the primary flushing fluid line to a valve in the bank of valves that is furthest from the outlet of the flow control circuit.
85. The method according to any one of Clauses 61 to 76, wherein the flow control circuit comprises a multi-port selection valve.
86. The method according to Clause 85, wherein the multi-port selection valve has an internal volume ranging from 5 mm³ to 1000 mm³.
87. The method according to any one of Clauses 61 to 86, wherein the instrument is a flow cytometer.
88. The method according to Clause 87, wherein the fluidic component of the instrument is a flow cell.
89. The method according to any one of Clauses 87 to 88, further comprising operably connecting a vacuum source to the fluidic component of the instrument.

Although the foregoing invention has been described in some detail by way of illustration and example for purposes of clarity of understanding, it is readily apparent to those of ordinary skill in the art in light of the teachings of this invention that some changes and modifications may be made thereto without departing from the scope of the appended claims.

Accordingly, the preceding merely illustrates the principles of the invention. It will be appreciated that those skilled in the art will be able to devise various arrangements which, although not explicitly described or shown herein, embody the principles of the invention and are included within scope. Furthermore, all examples and conditional language recited herein are principally intended to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

The scope of the present invention, therefore, is not intended to be limited to the exemplary embodiments shown and described herein. Rather, the scope of present invention is embodied by the appended claims. In the claims, 35 U.S.C. §112(f) or 35 U.S.C. §112(6) is expressly defined as being invoked for a limitation in the claim only when the exact phrase "means for" or the exact phrase "step for" is recited at the beginning of such limitation in the claim; if such exact phrase is not used in a limitation in the claim, then 35 U.S.C. § 112 (f) or 35 U.S.C. §112(6) is not invoked.

## Claims

1. A fluid supply system comprising:
an operating fluid line configured to transport an operating fluid therethrough from a proximal end to a distal end, and comprising an operating fluid reservoir connector at the proximal end configured to fluidically couple to an operating fluid reservoir comprising the operating fluid;
a primary flushing fluid line configured to transport a primary flushing fluid therethrough from a proximal end to a distal end, and comprising a primary flushing fluid reservoir connector at the proximal end configured to fluidically couple to a primary flushing fluid reservoir comprising the primary flushing fluid;
a secondary fluid line configured to transport a secondary fluid therethrough from a proximal end to a distal end, and comprising a secondary fluid reservoir connector at the proximal end configured to fluidically couple to a secondary fluid reservoir comprising the secondary fluid;
a flow control circuit fluidically connected to the distal end of the primary flushing fluid line and the distal end of the secondary fluid line, and configured to selectively permit passage of the primary flushing fluid and the secondary fluid through an outlet; and
a single fluidic connection configured to fluidically couple to the flow control circuit, the operating fluid line, and a fluidic component of an instrument.

2. The fluid supply system according to Claim 1, wherein the single fluidic connection is comprised of a quick connect fluid connector.

3. The fluid supply system according to Claim 1 or 2, wherein the single fluidic connection is comprised of a three-way valve.

4. The fluid supply system according to any one of the preceding claims, further comprising a fluid supply pump operably connected to the flow control circuit and the single fluidic connection.

5. The fluid supply system according to any one of the preceding claims, further comprising the operating fluid reservoir fluidically coupled to the operating fluid line.

6. The fluid supply system according to any one of the preceding claims, further comprising an operating fluid supply pump operably connected to the single fluidic connection.

7. The fluid supply system according to any one of the preceding claims, further comprising the primary flushing fluid reservoir fluidically coupled to the primary flushing fluid line.

8. The fluid supply system according to any one of the preceding claims, further comprising the secondary fluid reservoir fluidically coupled to the secondary fluid line.

9. The fluid supply system according to any one of the preceding claims, wherein the fluid supply system comprises a plurality of secondary fluid lines.

10. The fluid supply system according to any one of the preceding claims, wherein the flow control circuit comprises a bank of valves.

11. The fluid supply system according to any one of the preceding claims, wherein the flow control circuit comprises a multi-port selection valve.

12. The fluid supply system according to any one of the preceding claims, further a flow cytometer.

13. A method of analyzing a sample, the method comprising:
(a) introducing the sample into an instrument comprising a fluid supply system comprising:
an operating fluid line configured to transport an operating fluid therethrough from a proximal end to a distal end, and comprising an operating fluid reservoir connector at the proximal end configured to fluidically couple to an operating fluid reservoir comprising the operating fluid;
a primary flushing fluid line configured to transport a primary flushing fluid therethrough from a proximal end to a distal end, and comprising a primary flushing fluid reservoir connector at the proximal end configured to fluidically couple to a primary flushing fluid reservoir comprising the primary flushing fluid;
a secondary fluid line configured to transport a secondary fluid therethrough from a proximal end to a distal end, and comprising a secondary fluid reservoir connector at the proximal end configured to fluidically couple to a secondary fluid reservoir comprising the secondary fluid;
a flow control circuit fluidically connected to the distal end of the primary flushing fluid line and the distal end of the secondary fluid line, and configured to selectively permit passage of the primary flushing fluid and the secondary fluid through an outlet; and
a single fluidic connection configured to fluidically couple to the flow control circuit, the operating fluid line, and a fluidic component of an instrument; and
(b) supplying the operating fluid to the instrument to analyze the sample.

14. The method according to Claim 13, wherein the flow control circuit is as claimed in any of Claims 2 to 12.

15. A method of assembling an instrument, the method comprising operably connecting a fluid supply system to a fluidic component of an instrument, the fluid supply system comprising:
an operating fluid line configured to transport an operating fluid therethrough from a proximal end to a distal end, and comprising an operating fluid reservoir connector at the proximal end configured to fluidically couple to an operating fluid reservoir comprising the operating fluid;
a primary flushing fluid line configured to transport a primary flushing fluid therethrough from a proximal end to a distal end, and comprising a primary flushing fluid reservoir connector at the proximal end configured to fluidically couple to a primary flushing fluid reservoir comprising the primary flushing fluid;
a secondary fluid line configured to transport a secondary fluid therethrough from a proximal end to a distal end, and comprising a secondary fluid reservoir connector at the proximal end configured to fluidically couple to a secondary fluid reservoir comprising the secondary fluid;
a flow control circuit fluidically connected to the distal end of the primary flushing fluid line and the distal end of the secondary fluid line, and configured to selectively permit passage of the primary flushing fluid and the secondary fluid through an outlet; and
a single fluidic connection configured to fluidically couple to the flow control circuit, the operating fluid line, and a fluidic component of an instrument.
